(19)

Europäisches
Patentamt
European
Patent Office
Office européen
des brevets

(11)  EP 2 396 848 B1

(12)  **EUROPEAN PATENT SPECIFICATION**

(45) Date of publication and mention
of the grant of the patent:
**19.11.2014  Bulletin 2014/47**

(51) Int Cl.:
***H01M 10/0565*** (2010.01)   ***H01M 10/052*** (2010.01)
***C08G 81/02*** (2006.01)

(21) Application number: **10705476.9**

(22) Date of filing: **10.02.2010**

(86) International application number:
**PCT/US2010/023722**

(87) International publication number:
**WO 2010/093672 (19.08.2010 Gazette 2010/33)**

(54) **HIGHLY CONDUCTIVE POLYMER ELECTROLYTES AND SECONDARY BATTERIES INCLUDING THE SAME**

HOCHLEITFÄHIGE POLYMERELEKTROLYTE UND SEKUNDÄRBATTERIEN DAMIT

ÉLECTROLYTES POLYMÈRES EXTRÊMEMENT CONDUCTEURS ET BATTERIES SECONDAIRES LES COMPRENANT

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **11.02.2009  US 151662 P**

(43) Date of publication of application:
**21.12.2011  Bulletin 2011/51**

(73) Proprietor: **Dow Global Technologies LLC
Midland, MI 48674 (US)**

(72) Inventors:
• **BRUNE, Douglas, A.
Midland
MI 48642 (US)**
• **BABINEC, Susan, J.
Midland
MI 48640 (US)**
• **NEWSHAM, Mark
Sanford
MI 48657 (US)**
• **SILVIS, H., C.
Midland
MI 48642 (US)**
• **GAUPP, Carlton, L.
Midland
MI 48642 (US)**
• **HUGHES, Stephanie, L.
Beaverton
MI 48612 (US)**
• **WAGNER, Nicole, L.
Midland
MI 48640 (US)**
• **TALIK, Andrew, G.
Freeland
MI 48623 (US)**

(74) Representative: **Beck Greener
Fulwood House
12 Fulwood Place
London WC1V 6HR (GB)**

(56) References cited:
**WO-A2-02/33765     US-A- 5 196 484
US-A- 5 219 681     US-A- 5 424 150**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 396 848 B1

**Description**

FIELD OF THE INVENTION

The present invention is directed generally at polymeric electrolyte compositions that may be used in a battery and particularly at multi-phase electrolyte compositions having a structural phase and a conductive phase, and including a polyalkoxide-containing block copolymer.

BACKGROUND OF THE INVENTION

Rechargeable batteries have received tremendous attention in recent years. Such batteries also have come to be known as "secondary batteries" or even as "storage batteries". They can be operated to store a charge, and thereafter operated to discharge the charge to provide a source of electricity to a device. In general, these type of batteries have a small number of active components, which include the electrodes (specifically the anode and the cathode), which cooperate together to perform a reversible electrochemical reaction. In general, efforts to improve the performance (e.g., the durability and efficiency) of rechargeable batteries have concentrated in many instances upon the improvement of one of more of these active components.

One increasingly popular type of battery is a battery that employs a metal ion (e.g., a lithium-ion) in a generally cohesive mass of an electrolyte material. When an electrochemical cell of such a battery is discharging, generally lithium ions extracted from the anode flow to the cathode. When the cell is charging, the reverse process occurs. Lithium ions become extracted from the cathode and flow to and become inserted into the anode.

The use of single phase homogeneous materials generally have not sufficed for battery applications, due to the inability to achieve a desired balance of properties, such as electrical and mechanical properties. Efforts have been undertaken to explore materials systems suitable that have multiple distinct phases, with each phase contributing to improving a particular processing and/or performance characteristic of the material. Within the balance of mechanical and electrical properties there may be a number of specific competing considerations and needs. For example, for many applications it is important that the material provide a relatively cohesive mass, such as a solid, a gel, a paste, or the like, which retains a shape when not constrained (such as by a housing), and which can be readily handled without tearing, fracture or other failure. The material also desirably will permit for efficient ion mobility such as by providing a continuous flow path. Microstructure generally needs to be controlled such as for obtaining a generally uniform distribution of multiple phases. It is also important that the material be durable and withstand the dynamic thermal conditions to which it will be exposed. Phase compatability during processing and thereafter also is a consideration. Flame retardancy is especially desired for certain applications. Though on its face an ostensibly straightforward task, it has proven to be very difficult to arrive at high performance electrolytes. Numerous competing considerations need to be addressed and the success of any particular proposed combination has been far from predictable.

To address some of the considerations, copolymers have been proposed. For example, the manufacture of a graft copolymer including a ethylene oxide groups have been described by Giles et al. (US Patent No. 5,196,484) for grafts of polyethylene oxide onto the B blocks of an ABA block copolymer, by Hata et al (U.S. Patent No. 5,219,681) for block copolymers including ethylene oxide blocks and propylene blocks; and by Ohnishi et al (U.S. Patent No. 5,424,150), for ethylene vinyl acetate copolymers grafted with an polyethylene oxide graft, both incorporated herein in their entirety by reference. Examples of copolymers of ethylene and acrylic acid grafted with polyethylene oxide are described in "Preparation and Characterization of Poly(ethylene-graft-ethylene oxide", A Halldén and B. Wesslén, Journal of Applied Polymer Science, Vol. 60, 2495-2501 (1996). Examples of polystyrene polymers having polyethylene oxide grafts are described in P. Jannasch and B. Wesslén, J. Polymer Science, Part A: Polymer Chemistry, vol. 46, 1519-1529, (1993). The crosslinking reaction of diamines with acid containing polymers are described in "Chemical Reactions and Reactivity of Primary, Secondary, and Tertiary Diamines with Acid Functionalized Polymers", Z. Song and W. Baker, J. Polymer Science, Part A: Polymer Chemistry, vol. 30,1589-1600 (1992).

The general concept of employing block copolymers as a way to address the competing needs of battery electrolytes may seem a straightforward solution. But efforts to use these materials have been erratic and unsuccessful. For example, certain block copolymers have been evaluated in electrolyte compositions but have exhibited difficulties such as poor thermal stability, insufficient mechanical characteristics or have not achieved the electrical conductivity (e.g., the ionic conductivity) required for battery applications.

Notwithstanding efforts to date, until the present invention, there has been a need for an improved electrolyte material, particularly one that meets some or all of the needs for an electrolyte material such as having good mechanical and electrical characteristics, an attractive balance of electrical and mechanical characteristics, the capability of being handled substantially as a solid material, the physical state of a relatively cohesive mass, a relatively high shear modulus, good processability, the ability to be readily handled without failure, efficient ion mobility, high electrical conductivity (e.g., high ionic conductivity), a continuous flow path (such as for an ion), a generally uniform distribution of multiple phases, good durability, low corrosivity of the composition of the electrolyte material, good ability to withstand the dynamic thermal conditions to which it will be exposed, or relatively good flame retardancy. Such electrolyte materials may be particularly advantageous for use in a secondary battery, in a device that is free of a porous separator, or both.

SUMMARY OF THE INVENTION

In its various aspects, the present invention meets the above needs and overcomes various disadvantages of the prior art by the realization of unpredictable characteristics in block copolymer-containing electrolyte compositions, such as solid polymer electrolytes, attractive for use in a rechargeable battery. Accordingly, the invention provides a polymeric electrolyte composition comprising a block copolymer which is a solid at room temperature including at least one first polymer block having an elastic modulus of 0.7 GPa or more, and which is :-
a semi-crystalline polymer having a final melting temperature of greater than 60 °C, as measured by differential scanning calorimetry at a heating rate of 10 °C/min, or a glassy polymer having a glass transition temperature of greater than 60 °C, as measured by dynamic mechanical analysis according to ASTM E1640-99, and at least one second polymer block having an elastic modulus of 0.6 GPa or less, including a polyalkoxide, wherein the second polymer block is a polyalkoxide block including one or more alkylene oxides having from 2 to 8 carbon atoms, wherein the concentration of the alkylene oxides having from 2 to 8 carbon atoms is 85 weight percent or more based on the total weight of the polyalkoxide block,;
and a metal salt having a cation that is mobile in the polymeric electrolyte composition and is capable of carrying a charge, wherein the metal salt includes one or more alkali metal salts, one or more alkaline earth metal salts, or a combination thereof; and a solvent including one or more cyclic carbonates, one or more acyclic carbonates, one more fluorine containing carbonates, one or more cyclic esters, or any combination thereof, wherein the concentration of the solvent is greater than 25 weight percent based on the total weight of the polymeric electrolyte composition, wherein the solvent increases the mobility of the cations in the conductive phase, wherein the solvent includes an aprotic solvent;
wherein the first polymer block is present at a concentration greater than 35 weight percent based on the total weight of the block copolymer and includes 55 weight percent or more (based on the total weight of the first polymer block) of a first monomer that is styrene, methyl methacrylate, isobutyl methacrylate, 4-methyl pentene-1, butylene terephthalate, ethylene terephthalate, or an $\alpha$-olefin;
wherein the polymeric electrolyte composition is a heterogeneous material including a structural phase that is rich in the first polymer block, and a conductive phase that is rich in the polyalkoxide block and the solvent; wherein the structural phase is present at a concentration of 30 percent or more based on the total volume of the polymeric electrolyte composition;
wherein the polymeric electrolyte composition exhibits a shear modulus, G', as measured by dynamical mechanical analysis according to ASTM D5279-08 at 1 rad/sec and 30 °C, and an electrical conductivity, $\sigma$, as measured by AC impedance spectroscopy in a Solartron using an alternating current amplitude of 10 mV at about 30 °C, such that
G'·$\sigma$ is greater than 20 (S/cm)/Pa and
G' is from about $10^3$ to $10^9$ Pa
wherein the composition is useful as a polymeric electrolyte.
As a result of the various advantages that may be realized from the electrolyte compositions herein, they lend themselves to a number of useful applications. For example, in addition to its use as an electrolyte for carrying mobile metal salt, it may be used as an electrode (e.g., an anode, or a cathode) including a Polymeric electrolyte composition as disclosed herein and further including electroactive particles. It may also be used in a device that is free of a porous separator.
Another aspect of the invention is directed at a process for preparing a block copolymer, such as one described herein as useful for the polymeric electrolyte composition), comprising the steps of a) mixing: i) a linear copolymer containing at least 3 weight percent of a first monomer having a carboxylic acid group and at least 60 weight percent of a second monomer selected from ethylene and propylene; ii) a polyalkoxide containing ethylene oxide, propylene oxide, or a combination thereof and having one or more functional groups which are reactive with the carboxylic acid; and iii) optionally, one or more solvents; and b) reacting the functional group of the polyalkoxide with the carboxylic acid group of the linear copolymer to form a block copolymer having at least one polyalkoxide block grafted onto the linear copolymer, wherein the resulting block copolymer contains at least about 5 weight percent alkoxide groups based on the total weight of the block copolymer.
Yet another aspect of the invention is directed at an electrolyte composition (e.g., a polymeric electrolyte composition having the features of any of the foregoing aspects) exhibiting relatively low flammability comprising a polymer; a solvent including an organophosphate; and a metal salt. More preferably metal salts are lithium salts.
As will be seen from the teachings herein, the present invention reflects a surprising approach and solution to tackling the problems heretofore faced in the art, which has been limited due to previously, irreconcilable tradeoffs in electrical and mechanical properties needed for battery applications. The polymeric electrolyte compositions of the present invention have a surprising balance of high melting temperature or glass transition temperature, high electrical conductivity (e.g., ionic conductivity), and high stiffness that make them particularly useful as an ionically conductive material for battery cells.

The polymeric electrolyte compositions of the present invention exhibit an unexpected balance of characteristics including for instance, two, three, four, or more (e.g., a combination of all) characteristics such as the capability of being handled substantially as a solid material, electrical performance heretofore expected only from liquid electrolytes, a relatively high electrical conductivity, a relatively high shear modulus, relatively good processability, relatively good mechanical characteristics, the physical state of a relatively cohesive mass, the ability to be readily handled without failure, efficient ion mobility, relatively good electrical conductivity (e.g., ionic conductivity), a continuous flow path, a generally uniform distribution of multiple phases, relatively high durabilitiy, relatively good ability to withstand the dynamic thermal conditions to which it will be exposed, or relatively good flame retardancy,

## BRIEF DESCRIPTION OF THE DRAWINGS

FIG. 1. Illustrates components in an illustrative secondary battery cell having a separator.

FIG. 2. Illustrates components in an illustrative secondary battery cell which is free of a separator.

FIG. 3 illustrates a proton NMR spectrum of a polystyrene - polyethylene oxide block copolymer.

FIG. 4. Illustrates a relationship between conductivity and shear rate.

## DETAILED DESCRIPTION OF THE INVENTION

The present invention is directed at an electrolyte, and particularly a substantially cohesive electrolyte material having strength, electrical, and other characteristics especially attractive for use in a battery. The present invention particularly overcomes shortcomings in the art as it pertains to achieving an attractive balance of electrical and mechanical characteristics, so that the electrolyte can be handled substantially as a solid material, but will exhibit exhibit a surprisingly good combination of a relatively high electrical conductivity (e.g., a relatively high ionic conductivity) and a relatively good mechanical properties such as a relatively high shear modulus The electrolytes of the present invention are preferably polymeric electrolyte compositions including one or more polymers, and more preferably polymeric electrolyte compositions including one or more block copolymers.

It is believed that the electrolytes herein unexpectedly realize their properties through the use of a unique block copolymer including one or more first blocks (i.e., a first block component) having a melting temperature greater than about 60°C or a glass transition temperature greater than about 60°C, and one or more second blocks (i.e., a second block component) including a polyalkoxide. When combined with a metal salt and optionally a solvent, the copolymer is such that the metallic ion of the salt effectively can function as a mobile phase in the polymeric electrolytes composition and thus carry charge in a battery, while still desirably exhibiting mechanical properties (potentially even in the face of extreme thermal conditions) that lends the material to easy handling as a relatively cohesive mass.

The polymeric electrolyte composition preferably is a heterogeneous material having distinct and separate phases. By way of example, the separate phases may be different polymeric phases. In particular the polymeric electrolyte composition will include at least one first structural phase that contributes as one of its primary functions to the mechanical characteristics, durability, and thermal stability of the material and at least one second phase that contains as one of its primary functions to the electrical performance of the material. As will be seen, the first phase generally will be rich in a first block of a block copolymer while the second phase will generally be rich in a second block of the block copolymer. Preferably the second phase is generally rich in a polyalkoxide block. The first block and the second block are generally immiscible relative to each other, but, nonetheless are employed together in the material to realize the advantages and benefits herein. When combined with the metal salt, and preferably with the solvent, the second phase preferably defines a substantially continuous phase, which when placed between two electrodes, can help to provide an efficient path for ions to migrate.

A phase p that is rich in component c means that $(v_{cp}/v_c)/(v_p/v_T)$ is greater than 1, where $v_{cp}$ is the volume fraction of component c in phase p, based on the total volume of phase p, $v_c$ is the volume fraction of component c in the electrolyte, based on the total volume of the electrolyte, $v_p$ is the volume fraction of phase p, based on the total volume of the electrolyte, and $v_T=1$ is the total volume fraction of the electrolyte composition. Preferably a phase p that is rich in component c has $(v_{cp}/v_c)/(v_p/v_T)$ of about 1.1 or more, more preferably about 1.5 or more, even more preferably about 2 or more, even more preferably about 5 or more, and most preferably about 10 or more.

Block copolymer

Turning now to a more detailed discussion of the particular preferred block copolymers useful in the electrolytes herein, the block copolymer preferably contains one or more first blocks (i.e., one or more "A Blocks") and one or more second blocks (i.e., one or more "B Blocks"). For example, the block copolymer preferably may contain one or more first blocks and one or more second blocks which are compositionally distinct. An A Block and a B Block may be covalently bonded either directly to each other or may be connected by one or more additional blocks or functional group. The block copolymer may include a total of two, three, four, or even more blocks. For example, the block copolymer may be a diblock copolymer (i.e., an A-B diblock). Examples of diblock copolymer include block copolymers having one end of the A Block bonded to one end of the B Block (i.e., a linear diblock copolymer), block copolymers having one end of either the A Block or the B Block bonded to the side (i.e, at a location other than an end of the block) of the other block (i.e., a grafted diblock copolymer), and block copolymers having a side of an A Block grafted to a side of a B Block. The block copolymer may be a triblock copolymer such as an A-B-A or a B-A-B triblock copolymer. Other triblock copolymers include copolymers having three different blocks: A Blocks, B Blocks and C Clocks (e.g., A-B-C, B-A-C, or A-C-B triblock copolymers). The block copolymer may also be a graft copolymer which includes a plurality of grafts (e.g., a plurality of A Blocks grafted to a single B Block, or a plurality of B Blocks grafted to a single A Block. Preferred graft copolymers may have on average of about 1 or more, about 2 or more, about 5 or more, about 10 or more, about 20 or more, ore even about 50 or more grafts per polymer chain. The block copolymer may optionally be a star shaped block copolymers, such as a block copolymer including three, four or more arms which are connected together at a central region, where each arm is a block copolymer. The block copolymers which optionally be used are dendritic block copolymers or other block copolymers having repeated tree-like branching. For example, the block copolymer may have both one or more A Block grafted onto a B Block and one or more B Blocks grafted onto an A Block).

The polymer blocks may have a molecular weight that is sufficiently high so that two or more phases can be formed. The first block and the second block preferably are polymers having a molecular weight of about 400 Da or more, more preferably about 1,000 Da or more, even more preferably about 3,000 Da or more, and most preferably about 5,000 Da or more. Preferably, the molecular weight of the first block, the second block, or both is less than about 500,000 Da. However, it will be appreciated that the first block, the second block, or both may have a higher molecular weight of about 500,000 or more. The first block, the second block, or both may be polymers that are characterized as oligomers.

The first block, the second block or both may individually be homopolymers or copolymers. As used herein, hompolymers include polymers that include essentially only a single monomer type. As used herein, homopolymers also include polymers having a generally repeating structure, wherein the repeating unit is formed from one, two or more different monomer units. By way of example, an illustrative homopolymer having a repeating unit formed from two different monomer includes polymers formed by a condensation polymerization reaction, such as a condensation reaction of a diacid and a dialcohol. As used herein, copolymers include polymers having two or more different monomers, wherein one or more of the monomers is not present in a generally repeating arrangement. The first block and the second block may contain one or more monomers which may be the same monomers. For example, the first block and the second block may contain the same monomers at different concentrations so that the first block and the second block form two phases. Preferably the first block and the second block each comprise different monomers.

The concentration of the block copolymer in the electrolyte composition may be sufficiently high so that the first block provides structure to the composition so that it can be handled, so that the second block provides a continuous flow path for the metallic ions of the metallic salt, or both. The concentration of the block copolymer may be about 20 weight percent or more, based on the total weight of the polymeric electrolyte composition, although lower concentrations may be used. Preferably the concentration of the block copolymer is about 25 weight percent or more, more preferably about 30 weight percent or more, and most preferably about 35 weight percent or more, based on the total weight of the polymeric electrolyte composition. If the concentration of the block copolymer is too high, there may not be sufficient amount of metal salt to carry a sufficient current. The concentration of the block copolymer preferably is about 85 weight percent or less, more preferably about 75 weight percent or less, even more preferably about 70 weight percent or less, and most preferably about 65 weight percent or less, based on the total weight of the electrolyte. Electrolyte compositions containing about 50 weight percent or less block copolymer are also contemplated.

The copolymers may be crosslinked, or free of crosslinking. Preferably the block copolymer is substantially free of any crosslinks. If the block copolymer has crosslinks, the crosslink density, in units of micromoles of crosslinks per g of copolymer, is preferably about 500 $\mu$mole/g or less, more preferably about 100 $\mu$mole/g or less or even more preferably about 20 $\mu$mole/g or less, and most preferably about 10 $\mu$mole/g or less.

First Block

The block copolymer preferably is configured so that it has sufficient strength to form a cohesive mass (i.e., a material capable of being handles as a solid), which is able to carry other functional components of the electrolyte, such as the salt, the optional solvent, or both. For example, a material capable of being handled as a solid may be a material that does not require a container to maintain its shape. Thus, the block copolymer may contain a first block and a second block at relative concentrations, chemical characteristics, and molecular lengths such that the block copolymer forms a room temperature structure that includes a structural phase and a conductive phase. Preferably the structural phase is rich in the first block and the conductive phase is rich in the second block. Preferably the structural phase and the conductive phase are both continuous in three dimensions (i.e., the structural phase and the conductive phase are co-continuous).

The first block component (i.e., the one or more first blocks) may be included in the block copolymer at a concentration sufficient so that the block copolymer is a material capable of being handled as a solid, so that the structural phase that is rich in the first block component is a continuous phase, or both. The first block component preferably is present at a total concentration of about 15 weight percent or more, more preferably about 25 weight percent or more, even more preferably greater about 35 weight percent or more and most preferably about 35 weight percent or more, based on the total weight of the block copolymer. Preferred block copolymers may have a concentration of the first block component of about 90 weight percent or less, more preferably about 75 weight percent or less, even more preferably less about 70 weight percent or less, and most preferably about 65 weight percent or less, based on the total weight of the block copolymer.

The first block of the block copolymer preferably is a relatively stiff, rigid polymer which provides good mechanical properties to the mass. The first block preferably has an elastic modulus (e.g., at room temperature) of about 0.7 GPa or more, more preferably about 1.0 GPa or more, even more preferably about 1.3 GPa or more, and most preferably about 2 GPa or more, as measured using dynamic mechanical analysis (e.g., according to ASTM D5279-08).

The second block of the block copolymer preferably has an elastic modulus less than the elastic modulus of the first block. Without limitation, the second block may have an elastic modulus of about 0.6 GPa or less, preferably about 0.5 GPa or less, and most preferably about 0.3 GPa or less, as measured using dynamic mechanical analysis (e.g., according to ASTM D5279-08).

The first block may be a homopolymer or a copolymer. The first block has a first monomer which refer to either a single monomer or a group of monomers that forms a repeating pattern (i.e., a repeating structural unit), such as a pair of alternating monomers. Preferably the first block is a homopolymer (e.g., consisting essentially of the first monomer) or a copolymer having a high concentration of the first monomer and a low concentration of a second, different monomer. The first monomer may be present at a concentration of about 55 weight percent or more, preferably about 70 weight percent or more, more preferably about 80 weight percent or more, even more preferably about 90 weight percent or more, and most preferably about 95 weight percent or more, based on the total weight of the first block component. Preferably the stiffness, melting temperature, crystallinity, or any combination increases as the concentration of the first monomer increases. If the first block includes a first monomer and a second monomer, the first and second monomers of the first block are preferably randomly arranged along the first block. Preferably the first block component is not a block copolymer.

Without limitation, exemplary monomers (e.g., repeating structural units) which may be used for the first monomer comprise a compound containing olefinic unsaturation capable of polymerization. Preferred monomers include styrene, methyl methacrylate, isobutyl methacrylate, 4-methyl pentene-1, butylene terephthalate, ethylene terephthalate, and $\alpha$-olefins such as ethylene and propylene.

Examples of polymers having a first monomer of styrene, include polystyrene homopolymer and polystyrene copolymers. By way of example, the polystyrene may include, or consist essentially of atactic polystyrene, syndiotactic polystyrene, or both. Atactic polystyrene typically is glassy at room temperature. Preferred syndiotactic polystyrenes have at least 10 percent crystallinity at room temperature. The polystyrene may be modified by one or more impact modifiers, preferably at a concentration of about 40 weight percent or less, based on the total weight of the first monomer. By way of example, the impact modifier may include or consist essentially of polybutadiene, polyisoprene, or both. More preferably the polystyrene is free of impact modifier.

Preferred $\alpha$-olefin monomers for the first monomer include $\alpha$-olefins having less than about 10 carbon atoms. More preferred $\alpha$-olefins include ethylene and propylene. Most preferably the first monomer is ethylene. When ethylene (or propylene) monomers are used for the first monomer, the stiffness of the first block component will typically increase with increasing concentration of the first monomer.

The density, elastic modulus, bulk modulus, and poisson's ratio of a variety of polymers are listed in R.W. Warfield, and F. R. Bamet, "Elastic constants of Bulk Polymers", Naval Ordnance Laboratories, White Oak, Silver Spring, Maryland, NOLTR 71-226, April 12, 1972, page 2. For purposes of illustration, the elastic modulus (i.e., Young's Modulus), measured at a temperature of about 25 °C, of exemplary homopolymers which may be used for the first block or the second block or both are shown in TABLE 1.

TABLE 1.

| Polymer | Elastic Modulus, GPa |
| --- | --- |
| Polystyrene | 3.43 |
| Polymethyl methacrylate | 3.01 |
| Polyisobutyl methacrylate | 1.49 |
| Poly-4-methyl pentene-1 | 1.59 |
| Polyethylene (HDPE) | 0.88 |
| Polypropylene (isotactic) | 1.42 |
| Polyethylene oxide | 0.29 |

The second monomer may be any monomer, different from the first monomer, which can be polymerized with the first monomer to form a copolymer (preferably a generally random copolymer). The second monomer may be added to modify one or more properties of the polymer. In one particularly attractive example, the second monomer may provide a reactive site (or site which may become reactive) for adding the second block onto the first block. For example, the reactive site may be employed in a process of grafting the second polymer block onto the first block.

The second monomer may include a compound having olefinic unsaturation, a compound that upon polymerization has one or more functional groups, or any combination thereof. Any of the monomers which may be used for the first monomer may be used for the second monomer. Upon polymerization, the second monomer may have any functional group that is capable of reacting with a functional group of the second block. Preferred functional groups include a carboxyl, an ester, an aldehyde, a carbonyl, a hydroxyl, acid, acetyl, alcohol, ester, a ketone, an amine, an epoxide, or any combination thereof. Preferred second monomers include carboxylic acids, acrylates, and acetates. For example the second monomer may include one or more monomers selected from the group consisting acrylic acid, methacrylic acid, methyl acrylate, methyl methacrylate, ethyl acrylate, ethyl methacrylate, butyl acrylate, butyl methacrylate, 2-ethylhexyl acrylate, 2-ethylhexyl methacrylate, decyl acrylate, and ethylene vinylacetate. In one particular example, the second monomer includes or consists essentially of acrylic acid, methacrylic acid, methyl acrylate, butyl acrylate, ethylene vinyl acetate, or any combination thereof. Preferably the block copolymer, the second monomer, or both is substantially free,,or even entirely free of a monomer such as vinyl acetate monomer which may degrade to form acetic acid. If present, the concentration of vinyl acetate monomer preferably is about 5 weight percent or less, more preferably about 1 weight percent or less, even more preferably about 0.5 weight percent or less, and most preferably about 0.1 weight percent or less, based on the total weight of the second monomer of the first block, the total weight of the block copolymer, or both. In one aspect of the invention, the second monomer includes, or consists substantially of acrylic acid.

If employed, the concentration of the second monomer of the first block preferably is about 45 weight percent or less, more preferably about 30 weight percent or less, even more preferably about 20 weight percent or less, and most preferably about 10 weight percent or less, based on the total weight of the block copolymer. If employed, the second monomer preferably is present at a concentration of about 0.5 weight percent or more, more preferably about 1 weight percent or more, even more preferably about 2 weight percent or more, and most preferably about 3 weight percent or more.

The first block may optionally have one or more additional monomers, different from the first monomer and the second monomer. Without limitation, any of the monomers disclosed herein for the first monomer and the second monomer may be employed for the one or more additional monomers. If employed, the concentration of the one or more additional monomers in the first block preferably is less than about 10 weight percent, more preferably less than about 5 weight percent, and most preferably less than about 2 weight percent, based on the total weight of the first block.

The first block preferably is either a semi-crystalline polymer having a melting temperature which may be measured, for example, using Differential Scanning Calorimetry (DSC) (as described later herein in the section labeled Test Methods) or a glassy polymer having a glass transition temperature which may be measured (e.g., according to ASTM E1640-99) using dynamic mechanical analysis (and determined by the peak of the tan $\delta$ vs. temperature curve). Preferred semi-crystalline polymers have a crystallinity of at least about 10 weight percent, based on the total weight of the first block.

The first block component is preferably a solid at room temperature. Preferred block copolymers may have a first block component having a glass transition temperature (measured for example according to ASTM E1640-99 using dynamic mechanical analysis) or a melting temperature (e.g., a maximum melting temperature or a peak melting temperature measured by differential scanning calorimetry as later described herein in the section labeled "Test Methods"), or both greater than about 50 °C, preferably greater than about 60 °C, more preferably greater than about 70 °C, even more preferably greater than about 90 °C, and most preferably greater than about 110 °C. The first block component may have a glass transition temperature, a melting temperature (e.g., maximum melting temperature or peak melting temperature), or both that are less than about 250 °C, preferably less than about 180 °C, more preferably less than about 160 °C, and most preferably less than about 130 °C. The crystallinity (measured by differential scanning calorimetry as described in the section labeled "Test Methods") of the first block component preferably is about 10 weight percent or more, more preferably about 20 weight percent or more, even more preferably about 30 weight percent or more, and most preferably about 35 weight percent or more, based on the total weight of the first block of the block copolymer. The crystallinity of the first block preferably is about 90 weight percent or less, more preferably about 80 weight percent or less, and most preferably about 70 weight percent or less. Preferred first blocks require a large amount of latent heat to melt the crystals. By way of example, the first block may have a heat of fusion of about 10 J/g or more, preferably about 20 J/g or more, more preferably about 30 J/g or more, and most preferably about 35 J/g or more.

One or any combinations of the above properties may characterize the first block of the block copolymer in the neat state, when included in the block copolymer, when combined in the electrolyte compositions, or any combination thereof.

Second Block

The second block preferably includes a polymer which can be doped with relatively high concentrations of one or more metal salts, which has a relatively good metal ion conductivity when doped, or both.. By way of example, when doped with one or more lithium salts, the second block preferably has good lithium ion conductivity.

Without limitation the second block may include or consist essentially of one or more polyalkoxide. The polyalkoxide preferably includes, consist substantially of or consist of one or more alkylene oxide having from about 2 to about 8 carbon atoms. The concentration of the alkylene oxide having from about 2 to 8 carbon atoms in the second block, in the polyalkoxide, or both, preferably is about 85 weight percent or more, more preferably about 90 weight percent or more, even more preferably about 95 percent, and most preferably at least about or at least about 98 weight percent based on the total weight of the second block or the polyalkoxide. Without limitation, exemplary polymers for use in the second block include ethylene oxide homopolymers, and ethylene oxide-containing copolymers. Preferred ethylene oxide-containing copolymers include copolymers of ethylene oxide and at least one monomer selected from an alkylene oxide having from 3 to 8 carbon atom, an allyl glycidyl ether, an alkyl glycidyl ether, or any combination thereof. By way of example, the ethylene oxide-containing copolymer may be a copolymer of ethylene oxide and a monomer selected from propylene oxide, butylene oxide, methyl glycidyl ether or any combination thereof. More preferably, the ethylene oxide-containing copolymer includes, consists essentially of, or even consists entirely of ethylene oxide and propylene oxide. Any molar ratio of ethylene oxide to propylene oxide may be used. The molar ratio of ethylene oxide to propylene oxide is preferably at least about 2:1, more preferably at least about 4:1, even more preferably at least about 8:1 and most preferably at least about 9:1. Most preferably the second block is an ethylene oxide homopolymer.

The second block component (i.e., the one or more second blocks, such as blocks of the ethylene oxide homopolymer and/or ethylene oxide-containing copolymer), preferably will exhibit at least some crystallinity at about 20°C. The crystallinity of the second block component may be measured using differential scanning calorimetry, as described later herein in the Test Methods section. The crystallinity of the second block component preferably is about 60 weight percent or less, more preferably about 50 weight percent or less, even more preferably about 40 weight percent or less, and most preferably about 35 weight percent or less. The second block component preferably has a crystallinity of about 3 weight percent or less, more preferably about 6 weight percent or more, even more preferably about 10 weight percent or more, and most preferably about 15 weight percent or more. Though crystallinity is expected and preferred, it is possible that the second block component may be completely amorphous. When combined with the metal salt and optional solvent, the crystallinity of the second block component may decrease by 30 percent or more on a relative basis (by way of example from about 50 weight percent to about 35 weight percent), preferably about 50 percent or more on a relative basis (by way of example from about 50 weight percent to about 25 weight percent). More preferably, in the neat state (i.e., the pure block copolymer), the second block has crystallinity (preferably a crystallinity of about 40 weight percent or more) and in the polymeric electrolyte composition, the second block component may be completely amorphous. The conductive phase of the polymeric electrolyte composition preferably is completely amorphous.

The block copolymer may be prepared by any suitable means and the blocks may be prepared in any order. For example, the block copolymer may be prepared in situ by first polymerizing an A Block and polymerizing a B Block, or by first polymerizing a B Block and then polymerizing an A Block. The process may include a step of polymerizing a third block, such as a second A Block, a second B Block or a different block (e.g., a C Block). For example, the C Block may be the second block to be polymerized such that the C Block is interposed between the A Block and the B Block. The polymerization process may occur in a single reactor (e.g., by sequentially adding the monomers required to polymerize the different blocks, or the polymerization may occur in a series of reactors. Any of the above polymerization process may also include one or more steps of isolating the polymer prior to a polymerization step. The block copolymer may also be prepared by reacting two or more blocks to form a cohesive bond connecting the two blocks. For example, the A Block and the B Block may be prepared separately and then reacted together to form a block copolymer, such as a diblock including one A Block and one B Block, a graft copolymer having A Blocks grafted onto a B Block or B Blocks grafted onto an A Block, an A-B-A triblock, a B-A-B triblock, and the like. The reaction of two polymers each having a single reactive site (a monofunctional polymer) may result in diblock copolymer. Reacting a monofunctional and a difunctional polymer may result in a triblock copolymer.

Preferably, the first block, the second block, or more preferably both the first and second blocks contain about a single reactive site per block. Preferred reactive sites include a carboxyl, an ester, an aldehyde, a carbonyl, a hydroxyl, acid, acetyl, alcohol, ester, a ketone, an amine, an epoxide, or any combination thereof. Preferably the first block has reactive site and the second block has a reactive site (preferably a single reactive site) which can react together to graft one block onto the other block. In one aspect of the invention, the first block and the second block preferably each have about a single reactive site. In another aspect of the invention, one of the first block and the second block contains a single reactive site and the other contains a plurality of (e.g., two, three, four, or more) reactive sites. Although the first block and/or the second block may contain two or more reactive sites, preferably the first block and the second block do not both contain two or more reactive sites that can react with each other.

Oligomer or polymers having a single reactive site, such a single reactive site that may be used for grafting, include monoamines, such as polyetheramines available from Huntsman Corporation under the tradename Jeffamine® Monoamines (M Series), and monoether polyalkylene glycols. When grafted onto an acid site, such as an acrylic acid site, the monoamines may form an amide linkage and the monether polyalkylene glycols may form an ester linkage.

Salt

The materials herein may include one or more salts having a cation that is mobile in the polymeric electrolyte composition, that is capable of carrying a charge, or both. The materials herein (e.g., the polymeric electrolyte compositions) preferably include one or more salts which may be a solid or a liquid (e.g., an ionic liquid) at room temperature. A single salt or a mixture of two or more different salts may be used. The salt may include or consist essentially of one or more inorganic salts. By way of example, the inorganic salt may be a salt having a metallic cation (i.e., a metal salt) or may be free of metallic cations (such as in an ammonium salt). Any metal or combination of metals may be employed in the metal salt. Preferred metal salts includes alkali metal salts and alkaline earth metal salts. By way of example, the metal salt may include lithium, sodium, beryllium, magnesium, or any combination thereof. A particularly preferred metal salt is a lithium salt. Without limitation, the lithium salt may include, consist substantially of, consist essentially of, or even consist of lithium trifluoromethane sulfonate (lithium triflate or $LiCF_3SO_3$), lithium hexafluorophosphate ($LiPF_6$), lithium hexafluoroarsenate ($LiAsF_6$), lithium imide ($Li(CF_3SO_2)_2N$), lithium tris(trifluoromethane sulfonate) carbide ($Li(CF_3SO_2)_3C$), lithium tetrafluoroborate ($LiBF_4$), LiBF, LiBr, $LiC_6H_5SO_3$, $LiCH_3SO_3$, $LiSbF_6$, LiSCN, $LiNbF_6$, lithium perchlorate ($LiClO_4$), lithium aluminum chloride ($LiAlCl_4$), $LiB(CF_3)_4$, $LiBF(CF_3)_3$, $LiBF_2(CF_3)_2$, $LiBF_3(CF_3)$, $LiB(C_2F_5)_4$, $LiBF(C_2F_5)_3$, $LiBF_2(C_2F_5)_2$, $LiBF_3(C_2F_5)$, $LiB(CF_3SO_2)_4$, $LiBF(CF_3SO_2)_3$, $LiBF2(CF_3SO_2)_2$, $LiBF_3(CF_3SO_2)$, $LiB(C_2F_5SO_2)_4$, $LiBF(C_2F_5SO_2)_3$, $LiBF2(C_2F_5SO_2)_2$, $LiBF_3(C_2F_5SO_2)$, $LiC_4F_9SO_3$, lithium trifluoromethanesulfonyl amide (LiTFSA), or any combination thereof. Combinations of lithium salts may also be used. Similarly, any of the above salts may also be combined with a different salt, such as a different metal salt, or even with a salt that is free of a metallic cation (such as an ammonium salt). If employed, the one or more lithium salts may be some or all of the salt in the polymeric electrolyte composition. Preferably, the concentration of the lithium salt (such as the concentration of any one or any combination of the above lithium salts) is about 30 weight percent or more, more preferably about 50 weight percent or more, even more preferably about 70 weight percent or more, even more preferably about 95 weight percent or more, and most preferably about 98 weight percent or more, based on the total weight of the inorganic salt. One particularly preferred lithium salt is a lithium salt that includes lithium triflate. Preferably the inorganic salt, the lithium salt, or both includes lithium triflate at a concentration of about 95 weight percent or more, and more preferably about 98 weight percent or more. Most preferably the inorganic salt, the lithium salt, or both, consists essentially of, or consists entirely of lithium triflate.

The metal salt may be present at a concentration sufficiently high so that the polymeric electrolyte demonstrates measurable conductivity. The metal salt (e.g., the lithium salt) preferably is present in the polymeric electrolyte composition at a concentration of about 0.5 weight percent or more, more preferably about 1.0 weight percent or more, and most preferably about 1.5 weight percent or more, based on the total weight of the electrolyte composition, based on the total weight of the second phase, or both. The metal salt (e.g., the lithium salt) preferably is present in the polymeric electrolyte composition at a concentration of about 30 weight percent or less, more preferably about 20 weight percent or less, and most preferably about 15 weight percent or less, based on the total weight of the polymeric electrolyte composition, based on the total weight of the second phase, or both.

The ratio of the molar concentration of oxygen atoms (e.g. moles of -C=O, C-O-C, and-C-OH groups, where C refers to carbon atoms, O refers to oxygen atoms and H refers to hydrogen atoms) from the second block component of the block copolymer (such as from the polyalkoxide blocks) to the molar concentration of metal cations (i.e., moles of M+) from the metal salt (i.e., the O:M ratio). For lithium salt, the O:LI ratio is the ratio of the molar concentration of oxygen atoms from the second block component of the block copolymer (such as from the polyalkoxide blocks) to the molar concentration of U ions from the lithium salt. Preferably the O:M ratio (e.g., the O:Li ratio) is about 1:1 or more, more preferably about 2:1 or more, even more preferably about 4:1 or more, and most preferably about 10:1 or more. Preferred electrolyte compositions have an O:M ratio (e.g, an O:Li ratio) of about 120:1 or less, more preferably about 80:1 or less, even more preferably about 60:1 or less, even more preferably about 40:1 or less, and most preferably about 30:1 or less. By way of example, the O:M ratio (e.g., the O:Li ratio) of the electrolyte composition may be about 10, about 15, about 20, or about 25. In determining the O:M ratio, the O:M ratio, or both, the oxygen in the polymer in the first phase preferably is not included when calculating the molar concentration of oxygen atoms.

Solvent

Composition herein may further comprise a solvent or carrier, referred to collectively as solvent. The solvent may selected so that the mobility of a cation in the second phase of the polymeric electrolyte composition is increase, so that the glass transition temperature of the second phase of the polymeric electrolyte composition decrease, so that the crystallinity of the second phase of the polymeric electrolyte composition decreases, or any combination thereof. The solvent may be a solid or liquid at a temperature of about 25 °C. Preferred solvents are liquids at a temperature of about 25 °C.

Particularly preferred solvents may be characterized by a relatively high dielectric constant. Without limitation, exemplary solvents may have a dielectric constant greater than about 15, preferably greater than 27, more preferably greater than 50 and most preferably greater than about 66. Dielectric constants may be measured for example using the methodology of ASTM D150.

In one aspect of the invention, the solvent includes a solvent that is characterized as a compound having mono-hydroxy-terminated ethylene oxide-based ligands, an organophosphate, or both. For example, the solvent is an organophosphate solvent having mono-hydroxy-terminated ethylene oxide-based ligands. The solvent preferably includes, or consists essentially of an aprotic solvent, which may be anhydrous. By "anhydrous" it is meant that the solvent as well as the electrolyte composition material comprises water at a concentration of about 1,000 ppm (parts per million by weight) or less, preferably about 500 ppm or less, and more preferably about 100 ppm or less. Preferred aprotic solvents for forming polymeric electrolyte comprise at least one member selected from the group consisting of organic aprotic carriers or solvents, organic sulfites, organic sulfones, organic carbonates, organic esters, organic ethers, their fluorinated derivatives, and any combination thereof. Preferred organic esters include lactones and acetates.

The solvent preferably is an organic solvent. A preferred solvent includes or consists essentially of one or more cyclic carbonates, one or more acyclic carbonates, or one more fluorine containing carbonates, one or more cyclic esters, or any combination thereof. Acyclic carbonates include linear acyclic carbonates. Without limitation, examples of solvent may include cyclic carbonates preferably including ethylene carbonate (EC), propylene carbonate (PC), fluoroethylene carbonate (FEC), and butylene carbonate (BC). Additional examples may include a cyclic carbonate having a C=C unsaturated bond, such as vinylene carbonate (VC), vinylethylene carbonate (VEC), divinylethylene carbonate, phenylethylene carbonate, diphenyethylene carbonate, or any combination thereof.

Examples of linear acyclic carbonates such as dimethyl carbonate (DMC), ethylmethyl carbonate (EMC), diethyl carbonate (DEC), dipropyl carbonate (DPC), methylpropyl carbonate (MPC), ethyl propyl carbonate (EPC), and methylbutyl carbonate may also be used alone or in combination. Examples of a linear carbonate having a C=C unsaturated bond include methyl vinyl carbonate, ethyl vinyl carbonate, divinyl carbonate, allyl methyl carbonate, allyl ethyl carbonate, diallyl carbonate, allyl phenyl carbonate, diphenyl carbonate, or any combination thereof.

Other carbonates which may be used include fluorine containing carbonates, including difluoroethylene carbonate (DFEC), bis(trifluoroethyl) carbonate, bis(pentafluoropropyl) carbonate, trifluoroethyl methyl carbonate, pentafluoroethyl methyl carbonate, heptafluoropropyl methyl carbonate, perfluorobutyl methyl carbonate, trifluoroethyl ethyl carbonate, pentafluoroethyl ethyl carbonate, heptafluoropropyl ethyl carbonate, perfluorobutyl ethyl carbonate, or any combination thereof.

Exemplary cyclic esters include $\gamma$-butyrolactone ($\gamma$-BL), $\alpha$-methyl-$\gamma$-butyrolactone, $\gamma$-valerolactone; or any combination thereof. Examples of a cyclic ester having a C=C unsaturated bond include furanone, 3-methyl-2(5H)-furanone, $\alpha$-angelicalactone, or any combinations thereof.

Other solvents which may be used include fluorinated oligomers, dimethoxyethane, triethylene glycol dimethyl ether (i.e., triglyme), tetraethyleneglycol, dimethyl ether (DME), polyethylene glycols, bromo $\gamma$-butyrolactone, fluoro $\gamma$-butyrolactone, chloroethylene carbonate, ethylene sulfite, propylene sulfite, phenylvinylene carbonate, catechol carbonate, vinyl acetate, dimethyl sulfite, or any combination thereof. Among these solvents, EC, PC and $\gamma$-BL are preferred, and PC is most preferred. The concentration of the carbonate solvent (e.g., the concentration of EC, PC, $\gamma$-BL, or any combination thereof) preferably is about 50 weight percent or more, more preferably about 75 weight percent or more, even more preferably about 90 weight percent or more, and most preferably about 95 weight percent or more, based on the total weight of the organic solvent.

The solvent may include, consist substantially of (e.g., at least about 95 weight percent based on the total weight of the solvent), or even consist of one or more solvents that are characterized as a compound having mono-hydroxy-terminated ethylene oxide-based ligands, an organophosphate, or both. For example, the solvent is an organophosphate solvent having mono-hydroxy-terminated ethylene oxide-based ligands. Without limitation, one exemplary organophosphate which may be used is $O=P(OC_2H_4OC_2H_4OCH_3)_3$. Analogues containing propylene oxide, a combination of propylene oxide and ethylene oxide, a monoethyl ether, a monobutyl ether, a monopropyl ether, from 3 to 5 alkoxide groups, or the like may also be used. One approach contemplates selecting and employing a solvent so that flame retardancy of the electrolyte is managed. For example, it is possible to employ an organophosphate of a type an amount sufficient to improve the flame retardant characteristics of the electrolyte compared to a similarly prepared electrolyte in which the organophosphate is eliminated. An improvement in the flame retardant characteristics of the electrolyte may be characterized by a reduction in the horizontal burn rate (e.g., a reduction of at least 20 percent) as measured by ASTM D635; an increase in the oxygen index (e.g., an increase in the oxygen index by at least 1 percent on an absolute basis) as measured for example according to ASTM D2863; an increase in the the flash point (e.g., an increase of about 10°C or more, preferably an increase of about 20°C or more) as measured by the Cleveland Open Cup method ASTM D92; or any combination thereof. By way of example the organophosphate may be $O=P(OC_2H_4OC_2H_4OCH_3)_3$. The organophosphate, if employed, may be used at a concentration sufficient to improve the flame retardant characteristics of the electrolyte. If employed, the organophosphate preferably is present in an amount of about 1 weight percent or more, more preferably about 5 weight percent or more, even more preferably about 10 weight percent or more, even more preferably about 15 weight percent or more, and most preferably about 30 weight percent or more, based on the total weight of the electrolyte composition. If employed the organophosphate preferably is present in an amount of about 60 weight percent or less, preferably about 50 weight percent or less, and most preferably about 40 weight percent or less, based on the total weight of the electrolyte composition.

Electrolyte compositions which do not contain solvent and include a block copolymer as described herein typically have relatively low electrical conductivity (e.g., ionic conductivity) A sufficient amount of solvent preferably is present in the electrolyte composition so that the ionic conductivit is increased. A surprisingly low concentration of solvent, e.g., as low as about 5 percent by weight may be used in polymeric electrolyte compositions to increase ionic conductivity. The concentration of the solvent is preferably about 5 weight percent or more based on the total weight of the polymeric electrolyte compositions. For example, the ionic conductivity of a polymeric electrolyte composition of the present invention which includes about 15 weight percent solvent may be more than 200 times greater than the ionic conductivity of a polymeric electrolyte composition having the identical composition except containing no solvent Further increase in the ionic conductivity may be obtained by further increasing the solvent concentration. The concentration of the solvent in the electrolyte composition is preferably greater than about 25 weight percent, more preferably greater than about 30 weight percent, and most preferably greater than about 35 weight percent (e.g., about 45 weight percent or even about 50 weight percent). The concentration of the solvent in the electrolyte composition is preferably less than about 75 weight percent, more preferably less than about 65 weight percent, and most preferably less than about 60 weight percent based on the total weight of the electrolyte.

Additional characteristics of the polymeric electrolyte composition

The compositions herein may be characterized by:

i) $\sigma \cdot G'$ (i.e., the product of its ionic conductivity, $\sigma$ measured at a temperature of about 30°C, and its shear modulus, $G'$, measured at a temperature of about 30°C) of about 200 (S/cm)·(dynes/cm$^2$) or more, preferably about 1000 (S/cm)·(dynes/cm$^2$) or morde, more preferably about 3,000 (S/cm)·(dynes/cm$^2$) or more, and most preferably about $10^4$ (S/cm)·(dynes/cm$^2$) or more, where the ionic conductivity is measured using AC impedance spectroscopy as described herein in the section titled "Test Methods", and the shear modulus is measured for example according to ASTM D5279-08 using dynamic mechanical analysis at about 1 radian/sec;

ii) a shear modulus $G'$ (measured for example according to ASTM D5279-08, using dynamic mechanical analysis at about 30°C and about 1 radian/sec) of about $10^8$ dynes/cm$^2$ or more, preferably about $10^7$ dynes/cm$^2$ or more, more preferably about $10^7$ dynes/cm$^2$ or more, and most preferably about $10^8$ dynes/cm$^2$ or more;

iii) an electrical conductivity (e.g., an ionic conductivity) (measured using AC impedance spectroscopy as described herein in the section titled "Test Methods") measured at about 30°C of about $10^{-5}$ S/cm or more, preferably about $3 \times 10^{-5}$ S/cm or more, more preferably about $10^{-4}$ S/cm or more, and most preferably about $3 \times 10^{-4}$ S/cm or more;

iv) a final melting temperature (measured by differential scanning calorimetry as described herein in the section titled "Test Methods") of about 60 °C or more, preferably about 70 °C or more, and more preferably about 80 °C or more;

v) a glass transition temperature (measured for example, according to ASTM E1640-99 using dynamic mechanical analysis) of about 60 °C or more, preferably about 70 °C or more, and more preferably about 80 °C or more;

vi) a shear modulus, G' (measured for example according to ASTM D5279-08, using dynamic mechanical analysis at about 30°C and about 1 radian/sec) from about $10^4$ to about $10^{10}$ dynes/cm$^2$ (e.g. from about $10^4$ to about $10^6$ dynes/cm$^2$, from about $10^6$ to about $10^7$ dynes/cm$^2$, from about $10^7$ to about $10^8$ dynes/cm$^2$, from about $10^8$ to about $10^9$ dynes/cm$^2$, from about $10^9$ to about $10^{10}$ dynes/cm$^2$, or any combination thereof); or

vii) any combination of (i) through (vi).

The shear modulus of the polymeric electrolyte composition may be greater than the shear modulus of the conductive phase of the polymeric electrolyte compositions. The polymeric electrolyte compositions herein may have a shear modulus, G', and the conductive phase may have a shear modulus $G_{cp}$', both measured at about 30 °C and a frequency of about 1 radian/sec, wherein the ratio of $G'/G_{cp}$' preferably is about 10 or more, more preferably about 50 or more, even more preferably about 500 or more, and most preferably about 5000 or more. The shear modulus of the conductive phase may be determined from an electrolyte composition including the identical composition as found in the conductive phase.

The neat block copolymer (i.e., the pure block copolymer free from admixture or dilution with a solvent) may optionally have a conductive phase (i.e., the phase which is rich in the second block component) which is not a continuous phase. In this regard, it is preferable that upon addition of the solvent and the salt to the block copolymer, the conductive phase becomes a continuous (or co-continuous) phase. Without being bound by theory, this may be accomplished for example by selecting the first block component, the second block component, the solvent, and the salt, such that the solvent, the salt, or both are preferentially partitioned to the conductive phase (i.e. the conductive phase is rich in the solvent, the salt, or both.

The polymeric electrolyte compositions herein preferably are essentially anhydrous, or even entirely anhydrous. If present in the polymeric electrolyte composition, the concentration of water preferably is about 10 weight percent or less, more preferably about 2 weight percent or less, even more preferably about 1 weight percent or less, even more preferably about 0.1 weight percent or less, and most preferably about 0.01 weight percent or less, based on the total weight of the polymeric electrolyte composition.

The polymeric electrolyte composition having suitable properties may optionally also include one or more additional polymers. By way of example, the one or more additional polymers may be polymers which are not block copolymers. Preferred additional polymers include polymers that are miscible with either the first block (e.g., polymers which are miscible with the structural phase) or the second block (e.g., polymers which are miscible with the conductive phase). By way of examples, polymers miscible with the conductive phase may be a polyalkoxide polymer. The concentration of the one or more additional polymers that are not block copolymers may be sufficiently low so that the block copolymer is distributed throughout the structural phase, the conductive phase, or both. As such, the concentration of the block copolymer preferably is about 35 weight percent or more, more preferably about 50 weight percent or more, even more preferably about 70 weight percent, even more preferably about 90 weight percent or more, and most preferably about 95 weight percent or more, based on the total weight of the polymers in the polymeric electrolyte composition. For example, the concentration of the block copolymer may be about 100 weight percent, based on the total weight of the polymers in the polymeric electrolyte composition.

The total concentration of the polymers (i.e., the block copolymer and any optional polymers) in the polymeric electrolyte composition may be sufficiently high so polymeric electrolyte composition can be handled as a solid, so that the conductive phase provides a continuous path for the cations of a metallic salt, or both. Preferably, the total concentration of the polymers in the polymeric electrolyte composition is greater than about 20 weight percent, more preferably greater than about 25 weight percent, even more preferably greater than about 30 weight percent, and most preferably greater than about 35 weight percent by weight of the composition. The total concentration of the polymers in the polymeric electrolyte composition preferably is less than about 85 weight percent, more preferably less than about 75 weight percent, even more preferably less than about 70 weight percent, even more preferably less than about 65 weight percent, and most preferably less than about 50 weight percent, based on the total weight of the composition.

The structural phase of the polymeric electrolyte composition may distribute itself so as to effectively define a discrete phase or possibly a co-continuous phase. For instance, the structural component may distribute as a co-continuous phase, and thus it can help provide mechanical strength throughout the electrolyte. The high mechanical strength of the structural phase may be characterized by a relatively high elastic modulus, a relatively high tensile strength, a relatively high shear modulus, a relatively high degree of crystallinity, a relatively high melting temperature, a relatively high glass transition temperature, or any combination thereof (e.g., in relation with the conductive phase). For example, the structural phase preferably has either a melting temperature or a glass transition temperature greater than about 50 °C, more preferably greater than about 60 °C, even more preferably greater than about 80 °C, and most preferably greater than about 100 °C. The structural phase preferably is present at a concentration of about 5 percent or more, more preferably about 12 percent or more, even more preferably about 20 percent or more, and most preferably about 30 percent or more, based on the total volume of the polymeric electrolyte composition. The structural phase preferably is present at a volume concentration of about 85 percent or less, more preferably about 75 percent or less, even more preferably about 65 percent or less, and most preferably about 60 percent or less, based on the total volume of the polymeric electrolyte composition.

The conductive phase may be present at a sufficient volume so that the conductive phase is a continuous phase. Preferably the conductive phase is rich in, or includes essentially all of the first block component, the optional solvent, the metal salt, or any combination thereof. The total volume of the conductive phase preferably is about 15 percent or more, more preferably about 25 percent or more, more preferably about 35 percent or more, and most preferably about 40 percent or more, based on the total volume of the polymeric electrolyte composition. The total volume of the conductive phase preferably is about 95 percent or less, more preferably about 90 percent or less, even more preferably about 85 percent or less, and most preferably about 80 percent or less, based on the total volume of the polymeric electrolyte composition.

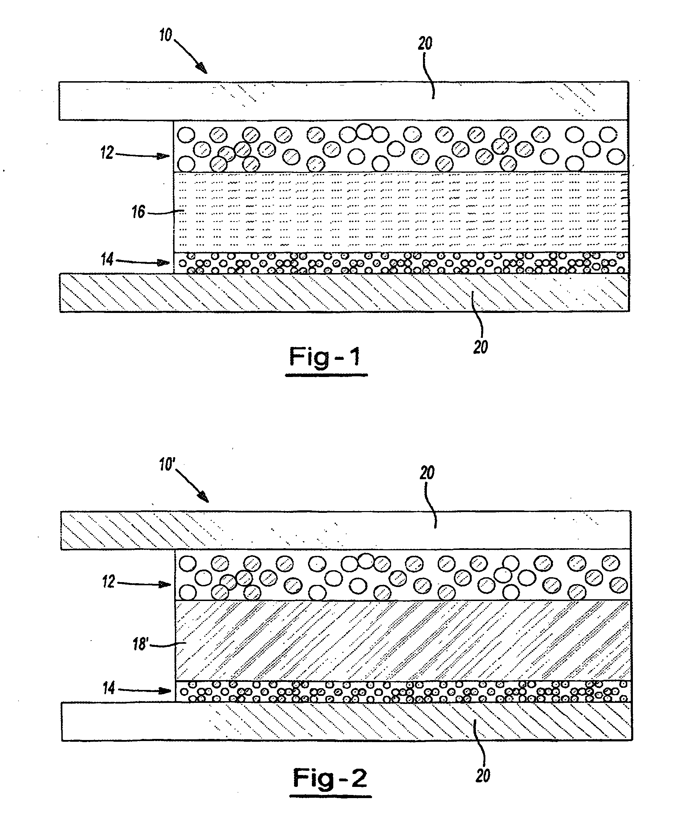

The compositions described herein may be used as an electrolyte in a secondary battery cell including at least one anode, at least one cathode, one or more current collectors, and optionally a separator, all in a suitable housing. As depicted in FIG. 1, an example of a secondary battery cell 10 is shown. It includes an anode 12 and a cathode 14. The anode and the cathode each may be attached to one or more metal current collectors 20. The metal current collectors may be electrically connected to devices and/or circuits requiring electricity (not shown). The secondary battery cell may optionally include a separator 16, such as a porous or semi-porous film. One or more ions in the electrolyte 18, may reversibly move between the anode, the cathode, and the electrolyte during charging and discharging of the battery. The secondary battery cell may be free of a separator, as depicted in FIG. 2. Such a secondary battery 10' may include an anode 12, a cathode 14, current collectors 20, and a solid polymer electrolyte 18' (e.g., the polymeric electrolyte composition of the present teachings), located between, and in electrical communication (e.g., in physical contact) with the anode 12, the cathode 14, or both.

A battery may include one or more battery cells. Typically, a plurality of battery cells 10 or 10' are connected to form a secondary battery. A plurality of cells may be provided by any convenient means. For example, two or more cells may be provided separately and stacked. Advantageously, the secondary battery cells may be provided as a continuous sheet or film which may be folded (e.g., fan folded), rolled, or otherwise stacked to form a high packing density of cells. Folded or stacked cells may be arranged such that the cells are in a parallel arrangement. When rolled, the cells may be in a concentric, or nearly concentric arrangement.

The polymeric electrolyte compositions disclosed herein may be used in a battery for providing power to an electrical device. Without limitation, the polymeric electrolyte compositions may be advantageously used in a battery for providing power to a mobile device, such as a cell phone, a vehicle (e.g., a vehicle having an electric engine), a portable device for recording or playing sound or images (e.g., a camera, a video camera, a portable music or video player such as a compact disk, cassette tape or MP3 playing device, a portable DVD player, a digital book or other wireless reading device such as a Kindle®), a portable computer and the like. Thus, such devices (e.g., mobile devices) including a battery containing a polymeric electrolyte composition disclosed herein are within the teachings herein.

The invention also contemplates electrolyte precursors, such as the electrolyte minus the metal salt. Thus, such compositions without the salt are within the teachings herein.

Composite electrode

The compositions herein may also be used for a composite electrode, (e.g., a composite anode) which includes one or more electroactive particles, "EAPs", dispersed in the polymeric electrolyte compositions. Preferred composite electrodes include from about 20 weight percent to about 80 weight percent electroactive particles, "EAPs", (based on the total weight of the electrode) dispersed in the polymeric electrolyte compositions. The composite electrode preferably includes the polymeric electrolyte composition at a concentration from about 20 weight percent to about 80 weight percent based on the total weight of the composite electrode.

The electroactive particles may be any size or shape so that a composite electrode can be formed. The electroactive particles preferably have a particle size (e.g., a median diameter, a mean diameter, a median length, a mean length, a top particle diameter, a top particle length, or any combination thereof) of about 100 $\mu$m or less, more preferably about 10 $\mu$m or less, even more preferably about 3 $\mu$m or less, and most preferably about 1 $\mu$m or less. The electroactive particles preferably have a particle size (e.g., a median diameter, a mean diameter, a median length, a mean length, a top particle diameter, a top particle length, or any combination thereof) of about 0.01 $\mu$m or more, more preferably about 0.05 $\mu$m or more.

The electroactive particles may have overlapping conduction bands and valence bands. For example, the electroactive particle may include a metal, a metal alloy, a metal oxide, or any combination thereof. The electroactive particle may include V, Fe, Mn, Co, Ni, Ti, Zr, Ru, Re, Pt, U, or any combination thereof. Preferably the EAP includes an oxide containing one, two, three, four, or more metals. Without limitation, exemplary EAPs, may include lithium. For example, the EAP may include Li, O, and another metal selected from Ni, Co, Mn, Ti, or any combination thereof. The plurality of electroactive particles may include a plurality of particles of a single chemical structure (e.g., a single metal, a single metal alloy, or a single metal oxide) or may include particles having different chemical structures (e.g., two or more different lithium containing particles). Uncoated or coated particles may be used in the composite electrode. Preferred EAPs are uncoated particles.

The following discussion applies to the teachings as a whole. Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints.

The disclosures of all articles and references, including patent applications and publications, are incorporated by reference for all purposes. References to the term "consisting essentially of" to describe a combination shall include the elements, ingredients, components or steps identified, and such other elements ingredients, components or steps that do not materially affect the basic and novel characteristics of the combination. The use of the terms "comprising" or "induing" to describe combinations of elements, ingredients, components or steps herein also contemplates embodiments that consist essentially of, or even consist of, the elements, ingredients, components or steps.

Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps. Likewise, any reference to "first" or "second" items is not intended to foreclose additional items (e.g., third, fourth, or more items); such additional items are also contemplated, unless otherwise stated. All references herein to elements or metals belonging to a certain Group refer to the Periodic Table of the Elements published and copyrighted by CRC Press, Inc., 1989. Any reference to the Group or Groups shall be to the Group or Groups as reflected in this Periodic Table of the Elements using the IUPAC system for numbering groups.

It is understood that the above description is intended to be illustrative and not restrictive. Many embodiments as well as many applications besides the examples provided will be apparent to those of skill in the art upon reading the above description. It is further intended that any combination of the features of different aspects or embodiments of the invention may be combined. The scope of the invention should, therefore, be determined not with reference to the above description, but should instead be determined with reference to the appended claims, along with the full scope of equivalents to which such claims are entitled. The disclosures of all articles and references, including patent applications and publications, are incorporated by reference for all purposes. The omission in the following claims of any aspect of subject matter that is disclosed herein is not a disclaimer of such subject matter, nor should it be regarded that the inventors did not consider such subject matter to be part of the disclosed inventive subject matter.

Test Methods

Melting temperature (i.e., peak melting temperature, Tp), final melting temperature ($T_f$), and heat of fusion ($H_f$) may be measured using differential scanning calorimetry. Differential scanning calorimetry (DSC) is performed using 1-3 mg of polymer in a sealed pan, under helium flow, on a TA Instruments DSC 2920. The samples are cooled to -120 °C, then heated to 120 °C at a rate of 10 °C/min, followed by re-cooling to -120 °C and reheating to 120 °C, both at a rate of 10 °C/min. The peak melting temperature, melting temperature and heat of fusion are measured on the second heating. The crystallinity, Xc, is calculated by dividing $H_f$ by the heat of the theoretical heat of fusion, $H_t$, for the polymer (i.e., the polyethylene oxide homopolymer) having 100 percent crystallinity and multiplying by 100 percent:

$$Xc = 100 \text{ percent} \times (H_f / H_t)$$

where $H_t$ = 188 J/g and the theoretical $T_f$ for a perfect crystal is 66 °C for polyethylene oxide homopolymer, $H_t$ = 287 J/g for polyethylene (see e.g., F. Rodriguez, Principles of Polymer Science, 2nd Edition, Hemisphere Publishing Co., 1982, p. 54), and $H_t$ = 165 J/g for isotactic polypropylene (see e.g., B. Wunderlich, Macromolecular Physics, Volume 3, Crystal Melting, Academic Press, New York, 1980, p. 48).

The conductivity of the polymeric electrolyte compositions may be measured using AC impedance spectroscopy in a Solartron using an alternating current (AC) amplitude of about 10mV. Details of the AC impedance spectroscopy method are in Handbook of Batteries, 3rd Ed; David Linden and Thomas Reddy, Editors, McGraw-Hill, 2001, New York, NY, pp.2.26 - 2.29, incorporated herein by reference.

The shear modulus, the loss modulus, and the tan delta of the polymers and of the polymeric electrolyte compositions may be measured using dynamic mechanical analysis (e.g., according to ASTM D5279-08). Unless otherwise specified shear modulus is measured at a temperature of about 30 °C and a oscillatory shear frequency of about 1 radian/sec at a strain of typically about 0.04 percent.

Dynamic mechanical analysis of samples that are free of solvent is performed a Rheometrics Ares using torsion on a rectangular geometry. Data collection and analysis is handled by TA Orchestrator V 6.6. OB2 software package. The geometry of the samples is about 25-30mm x about 6-13 mm x about 1.6 mm. The temperature sweep experiments are carried out at 2 °C/min from -100 °C to 50-100 °C. An oscillatory frequency of about 1 rad/s is used.

Dynamic mechanical analysis of samples that contain solvent at a concentration less than 40 weight percent is performed on a Rheometrics Solid Analyzer RSA II using 15 mm parallel plates geometry. Data collection and analysis is handled by RSI Orchestrator V6.5.8 software package. The samples are prepared by compression molding at room temperature with a pressure of 5-8 tons. The diameter and thickness of the samples are about 12.7 mm and about 1.8 mm, respectively.

Dynamic mechanical analysis of samples that contain more than 40 weight percent solvent are performed on a Paar Physica UDS-200 rheometer using a 25 mm, 6° cone fixture and plate geometry. Data collection and analysis is handled by the Paar Physica US200 ver. 2.21 software package. The sample is placed in the center on the bottom plate. The test fixture is then lowered to a height of 0.06mm by the instrument. Once that height is obtained, the software stops the fixture and notifies that the excess material should be cleaned from the test fixtures. After cleaning, the fixture is lowered to the appropriate test height, 0.05mm.

The glass transition temperature ($T_g$) of the polymers and of the electrolyte compositions may also be measured using dynamic mechanical analysis (e.g., according to ASTM E1640-99), using the test equipment, conditions, and sample geometry described above.

## EXAMPLES

Preparation of Block Copolymers

Example 1. Polyethylene Oxide Grafted onto an Ethylene-Acrylic Acid Copolymer Using an Ester Linkage.

About 15 mg of an ethylene-acrylic acid (EAA) copolymer having about 6.5 weight percent (about 2.63 mole percent) acrylic acid (commercially available from THE DOW CHEMICAL CO. under the tradename and grade identification of PRIMACOR™ 3340) is dissolved in about 200 ml of hot xylenes at a temperature of about 100 °C. About 20.3g of a poly(ethylene glycol) methyl ether (PEG-ME) having a single hydroxyl group and a number average molecular weight of about 750 (available from Aldrich Chemical) is added to the EAA/xylene solution. The molar ratio of -OH groups on the PEG-ME to the -COOH groups on the EAA is about 2:1. About 1.0 g of p-toluenesulfonic acid (about 5.3 mmol) and about 0.25 g of Irganox® B225 stabilizer is added to the solution. The solution is heated to reflux for about 20 hours. Water is removed from the reaction by azetotropic distillation and collected (e.g., in a Dean-Stark trap). Infra-red analysis of the reaction mixture is expected to indicate that the conversion of acid to ester groups (acid C=O stretch at 1700 cm-1 vs. ester C=O stretch at 1732 cm-1) is at least about 85 mole percent. The reaction solution is cooled to a temperature of about 80 °C, and the product graft polymer is isolated by precipitation into an 80/20 (v/v) mixture of methanol/water in a Waring blender in order to remove unreacted PEG-ME. The product is collected by filtration. The precipitate is further purified by redissolving in a minimum quantity of hot toluene, and again precipitating into excess 80/20 methanol/water. The graft copolymer is again isolated by filtering. After isolation by filtration, the polymer is dried in vacuo overnight at about 75 °C. The product polymer is pressed into a film and is characterized by FT-IR, Differential Scanning Calorimetry (DSC) and proton NMR. The DSC indicates that the graft copolymer has a melting temperature of about 100°C and a heat of fusion of about 47 J/g. The NMR analysis indicates that the graft copolymer contains about 32 weight percent poly(ethylene oxide). The ethylene-acrylic acid concentration of the graft copolymer is about 68 weight percent. The poly(ethylene oxide) graft is attached to the EAA by an ester linkage.

## EXAMPLE 2

Example 2 is prepared similar to Example 1. About 26.1g of PRIMACOR™ 3340 and 16.5g of a poly(ethylene glycol) methyl ether having a number average molecular weight of about 350 (available from Aldrich Chemical) is used. The ratio of the OH on the PEG-ME to the COOH groups is about 2.0. The two polymers are reacted in about 300 mL xylene with 1.1g p-toluenesulfonic acid and 0.25g Irganox™ B225 stabilizer at time for about 22 hours at a reaction temperature of about 100°C. The product has at least about 80 percent of the acid groups on the backbone converted to ester groups, as determined using infrared spectroscopy. NMR analysis of the dried product indicates that the poly(ethylene oxide) concentration is about 20 weight percent.

EXAMPLE 3

Example 3 is prepared similar to Example 1. About 26.1g of PRIMACOR™ 3340 and 35g of a poly(ethylene-propylene glycol) methyl ether (i.e., a copolymer of ethylene oxide and propylene oxide having a single -OH group) having a number average molecular weight of about 970 (available from Aldrich Chemical) is used. The ratio of the OH on the PEG-ME to the COOH groups is about 2.0. The two polymers are reacted in about 300 mL xylene with 1.4g p-toluenesulfonic acid and 0.25g Irganox™ B225 stabilizer at time for about 20 hours at a reaction temperature of about 100°C. The product has at least about 80 percent of the acid groups on the backbone converted to ester groups, as determined using infrared spectroscopy. NMR analysis of the dried product is expected to indicate that the poly(ethylene oxide) concentration of the graft copolymer is about 30 weight percent.

EXAMPLE 4

Example 4 is prepared similar to Example 1. About 26.1 g of PRIMACOR™ 3340 and 108.3 g of a poly(ethylene glycol) methyl ether (i.e., an ethylene oxide homopolymer having a single -OH group) having a number average molecular weight of about 2000 (available from Aldrich Chemical) is used. The ratio of the OH on the PEG-ME to the COOH groups is about 2.0. The two polymers are reacted in about 600 mL xylene with 2.0g p-toluenesulfonic acid and 0.25g Irganox™ B225 stabilizer at time for about 24 hours at a reaction temperature of about 100°C. The product has at least about 75 percent of the acid groups on the backbone converted to ester groups, as determined using infrared spectroscopy. NMR analysis of the dried product indicates that the poly(ethylene oxide) concentration of the graft copolymer is about 40 weight percent.
The graft copolymer is expected to have a peak melting temperature of about 99 °C and a heat of fusion (attributable to the polyethylene copolymer backbone) of about 49 J/g as measured by differential scanning calorimetry.

EXAMPLE 5 Ethylene Oxide-Propylene Oxide Copolymer Grafted onto an Ethylene-Acrylic Acid Copolymer Using an Amide Linkage

A graft copolymer having an EAA backbone and alkoxide grafts attached by an amide linkage is prepared by grafting JEFFAMINE® XTJ-505 onto PRIMACOR™ 3440. JEFFAMINE® XTJ-505 is a copolymer of about 10 mole percent ethylene oxide and about 90 mole percent propylene oxide having one terminal amine group and one methyl ester group containing no alcohol groups. JEFFAMINE® XTJ-505 is available from HUNTSMAN CORPORATION and has a molecular weight of about 600 g/mole. PRIMACOR™ 3440 is a copolymer of ethylene and acrylic acid containing about 9.7 weight percent (about 4.01 mole percent) acrylic acid and having a melt flow rate of about 10 g/10min (as measured according to ISO 1133 at 2.16kg / 190°C) is commercially available from THE DOW CHEMICAL CO.
About 20 g of PRIMACOR™ 3440 and about 56.5 g JEFFAMINE® XTJ-505 are melt mixed at about 180°C under a nitrogen blanket by stirring for about 48 hours. The molar ratio of amine groups (-NH2) to carboxylic acid groups (-COOH) is about 3.5:1. Infra-red analysis of the reaction mixture indicates at least about 75 mole percent conversion of the acid to amide groups (acid C=O stretch at 1700 cm-1 vs. amide C=O stretch at 1645 cm-1). The melt is then poured into stirred acetone and/or methanol. The polymer is then cut into small pieces and washed with methanol via a Soxhlet extractor apparatus for 2 days. Next, the polymer is dried in vacuo overnight at about 70 °C. The product polymer is pressed into a film and is characterized by FT-IR, DSC and proton NMR. The DSC indicates that the graft copolymer has a melting temperature of about 100°C and a heat of fusion of about 31 J/g. The NMR analysis is expected to indicate that the concentration of the ethylene oxide-propylene oxide grafts is about 36 weight percent based on the total weight of the graft copolymer. The poly(ethylene oxide-co-propylene oxide) graft is attached to the EAA by an amide linkage.

EXAMPLE 6

Example 6 is prepared similar to Example 5. About 40 g of PRIMACOR™ 3440 and about 97 g of JEFFAMINE® XTJ-5005 are melt mixed at about 180°C under a nitrogen blanket by stirring for about 48 hours. The molar ratio of amine groups (-NH2) to carboxylic acid groups (-COOH) is about 3:1.The resulting graft copolymer contains about 31 weight percent poly (ethylene oxide-co-propylene oxide) grafts based on the total weight of the graft copolymer.

EXAMPLES 7 and 8 - Comparative Examples

Example 7 is a polyethylene oxide homopolymer having a weight average molecular weight of about 100,000 Da.
Example 8 is a copolymer of ethylene oxide and propylene oxide.

Preparation of electrolyte samples

Comparative electrolyte samples 1 through 6 are prepared by mixing the polyethylene oxide homopolymer of Example 8 with lithium triflate. The molar ratio of the oxygen atoms of the polyethylene oxide to the lithium ions of the lithium triflate is about 12:1. Comparative electrolyte samples 2 through 6 also include propylene carbonate solvent at a concentration from about 15 weight percent to about 75 weight percent. The compositions of comparative electrolyte samples 1 through 6 are listed in TABLE 2 below.

Comparative electrolyte samples 1 through 6 are tested using dynamic mechanical analysis (e.g., according to ASTM D5279-08) at a temperature of about 30 °C and a shear rate of about 1 radian/sec to measure the mechanical properties (shear modulus and loss modulus). Ionid conductivity is measured using AC impedance spectroscopy in a Solartron using an AC amplitude of about 10mV.

The ionic conductivity measured at 30°C and 60°C, and the shear modulus are listed in TABLE 2. The product of the ionic conductivity at 30°C and the shear modulus is listed in TABLE 2 and ranges from about 0.02 to about 42 $(S/cm)(dynes/cm^2)$.

| TABLE 2. Polymeric Electrolyte Compositions Using Polyethylene Oxide Homopolymer | | | | | | |
|---|---|---|---|---|---|---|
| Comparative Electrolyte Sample | 1 | 2 | 3 | 4 | 5 | 6 |
| PEO homopolymer + lithium triflate, weight percent | 100 | 85 | 70 | 55 | 40 | 25 |
| Propylene carbonate, weight percent | 0 | 15 | 30 | 45 | 60 | 75 |
| O:Li molar ratio | 12:1 | 12:1 | 12:1 | 12:1 | 12:1 | 12:1 |
| G' @30°C, dynes/cm$^2$ | $1.8 \times 10^9$ | $1.3 \times 10^5$ | $6.6 \times 10^3$ | $2.3 \times 10^3$ | $8.5 \times 10^2$ | 9.0 |
| σ @30°C, (S/cm) | $2.4 \times 10^{-8}$ | $5.5 \times 10^{-5}$ | $3.0 \times 10^{-4}$ | $9.5 \times 10^{-4}$ | $1.6 \times 10^{-3}$ | $1.8 \times 10^{-3}$ |
| σ @60°C, (S/cm) | $1.9 \times 10^{-6}$ | $1.5 \times 10^{-4}$ | $7.8 \times 10^{-4}$ | $1.8 \times 10^{-3}$ | $2.7 \times 10^{-3}$ | $2.7 \times 10^{-3}$ |
| G' $\times$ σ @30°C | 43 | 6.9 | 2.0 | 2.2 | 1.4 | 0.02 |

Electrolyte samples using the graft copolymer are prepared by first dissolving the graft copolymer of EXAMPLES 1-6 in tetrahydrofuran (THF) along with sufficient lithium triflate (i.e., lithium trifluoromethanesulfonate, or Li-TFSA) to provide an atom ratio of oxygen to lithium (O:Li) from about 12:1 to about 20:1. The resulting solution is dried, first at room temperature under continuous nitrogen flow, then under vacuum to remove the THF. Samples of the dried material are swelled with 30 weight percent and with 45 weight percent propylene carbonate based on the total weight of the solid polymer electrolyte (SPE).

Thus formed, the SPE samples are tested using dynamic mechanical analysis (e.g., according to ASTM E1640-99) to measure the glass transition temperature ($T_g$). Samples are prepared for electrical and mechanical measurements. Conductivity is measured using AC impedance spectroscopy in a Solartron using an AC amplitude of about 10mV and mechanical properties (shear modulus and loss modulus) are measured by dynamic mechanical spectroscopy (e.g., according to ASTM D5279-08) at a temperature of about 30 °C and a shear rate of about 1 radian/sec.

At 30°C, the SPE samples containing the graft copolymer of Example 2 prepared with an O:Li ratio of about 12 have a conductivity of about $1 \times 10^{-4}$ S/cm and about $3 \times 10^{-4}$ S/cm, and a shear modulus of at least about $10^7$ dynes/cm$^2$, corresponding to samples with 30 weight percent and 45 weight percent propylene carbonate, respectively. At 30°C, the SPE samples containing the graft copolymer of Example 3 prepared with an O:Li ratio of about 12 have a conductivity of about $3 \times 10^{-4}$ S/cm and about $5 \times 10^{-4}$ S/cm, and a shear modulus of at least about $10^7$ dynes/cm$^2$, corresponding to samples with 30 weight percent and 45 weight percent propylene carbonate, respectively. At 30°C, the SPE samples containing the graft copolymer of Example 4 prepared with an O:Li ratio of about 12 have a conductivity of about $3 \times 10^{-4}$ S/cm and about $1.3 \times 10^{-3}$ S/cm, and a shear modulus of at least about $3 \times 10^6$ dynes/cm$^2$, corresponding to samples with 30 weight percent and 45 weight percent propylene carbonate, respectively. The product of the ionic conductivity and the shear modulus is at least about 1,000 $(S/cm)(dynes/cm^2)$.

At 30°C, the SPE samples containing the graft copolymer of Example 6 prepared with an O:Li ratio of about 12 have a conductivity of about $1.5 \times 10^{-5}$ S/cm and about $5 \times 10^{-5}$ S/cm, and a shear modulus of at least about $10^7$ dynes/cm$^2$, corresponding to samples with 30 weight percent and 45 weight percent propylene carbonate, respectively. The product of the ionic conductivity and the shear modulus is at least about 500 $(S/cm)(dynes/cm^2)$.

At 30°C, the SPE samples containing the graft copolymer of Example 7 prepared with an O:Li ratio of about 12 have a conductivity of about $6 \times 10^{-8}$ S/cm and about $5 \times 10^{-5}$ S/cm, and a shear modulus of at least about $10^7$ dynes/cm$^2$, corresponding to samples with 30 weight percent and 45 weight percent propylene carbonate, respectively.

At 30°C, the SPE samples containing the ethylene oxide-propylene oxide copolymer of Comparative Example 8 prepared with an O:Li ratio of about 12 and a propylene carbonate concentration from about 30 weight percent to about 45 weight percent have a conductivity of about $1 \times 10^{-3}$ S/cm and a shear modulus of less than about $10^3$ dynes/cm$^2$. The product of the ionic conductivity and the shear modulus is less than about 1 (S/cm)(dynes/cm$^2$).

EXAMPLES 9-12. Preparation of polystyrene / polyethylene oxide block copolymers.

EXAMPLES 9-12: 70 weight percent Polystyrene / 30 weight percent Poly (Ethylene Oxide) Block Copolymer.

Material Preparation

Cyclohexane (Fisher Scientific, ACS Certified) is purged with nitrogen. Prior to loading into the reactor, the cyclohexane is passed through a column of activated alumina (UOP A-2 grade). Tetrahydrofuran (Aldrich, anhydrous, 99.9 percent, inhibitor-free, packed under nitrogen) is passed through two activated alumina columns and collected anaerobically into a transfer tank. Styrene (Ashland Chemical, 10-15 ppm inhibitor) is passed through a column of activated alumina to remove the 4-*tert*-butylcatechol inhibitor, and then passed through a column of catalyst (Q5™ reactant, available from Engelhard Corporation) and transferred into a holding tank. Ethylene Oxide (EO) (Aldrich, 99.5+ percent, lecture bottles) is anaerobically passed through a miniature cylinder containing calcium hydride and distilled into a cooled (-65 °C) evacuated transfer tank equipped with quick connects. The weight loss of the EO lecture bottle is monitored. Sec-Butyllithium (s-BuLi) initiator (Aldrich, 1.3 M in cyclohexane) is used as received.

The anionic polymerization of styrene is carried out in a custom-built, heavy-walled, glass cylindrical polymerization reactor with an internal volume of 2200 mL. The reactor is maintained under a positive pressure of nitrogen. The typical polymerization process includes the following steps: adding the cyclohexane anaerobically to the reactor through stainless steel plumbing, warming the cyclohexane to about 45 °C through the jacketed glass reactor using a circulating water bath; adding the sec-Butyllithium (i.e. s-BuLi) anaerobically to the reactor; adding the styrene monomer (about 10-11 weight percent) anaerobically to the reactor in the same manner as the s-BuLi; polymerizing the styrene at a reaction temperature of about 45 °C; stirring for at least one hour; and reacting at a nitrogen pressure of about 30 psig.

Preparation of Potassium Naphtthalenide (Knap): The desired amount of naphthalene is weighed and added to a single-necked round-bottom flask (RBF) with an outer joint equipped with a glass stir bar. Sections are cut from the potassium metal while the metal is immersed in mineral oil, and quickly transferred to a tared vial of mineral oil. After 3 vacuum purges of the RBF with nitrogen, tetrahydrofuran is added anaerobically and the resultant green mixture is stirred for at least two hours. A 0.1 M KNap solution is usually prepared; with the concentration of the potassium naphthalenide solution determined using a titration method.

The ethylene oxide is then polymerized to form the diblock copolymer by adding the dried hydroxy-terminated polystyrene to a 2-liter RBF with two necks and equipped with a stir bar (a flow control adapter is connected to one port and a septum to the other); vacuum-purging the PS-OH with nitrogen (about three times) through the adapter, Adding the tetrahydrofuran anaerobically to the RBF through the septum; stirring the mixture is stirred to ensure all of the PS-OH has dissolved; titrating the PS-OH with KNap until the end point; adding the EO to the polymerization reactor; polymerization the EO at a reaction temperature of about 45 °C for about 15 h (e.g., during which time the pressure decreases to less than about 5 psig); collecting the polymer mixture through the valve port at the bottom of the reactor; removing the solvent with a rotary evaporator; and drying the polymer in a vacuum oven at about 60 °C overnight to remove residual solvent and volatile byproducts (naphthalene and dihydronaphthalene from the KNap titration).

The number-average molecular weight of the hydroxy-terminated polystyrene is determined from GPC equipped with a refractive index detector. The number-average molecular weight of the PEO block is determined from integration of the $^1$H NMR spectrum. The molecular weight of the PS-PEO block copolymer is the total of the molecular weights of the PS block and the PEO blocks. The molecular weight of PS-PEO block copolymer is determined using GPC equipped with a light-scattering detector. A small lower molecular weight shoulder is observed in the GPC, which may be attributed to unreacted PS-OH. The measured number average molecular weight of the polystyrene block, the number average molecular weight of the polyethylene oxide block, the total number average molecular weight of the block copolymer, the weight average molecular weight of the block copolymer, and the polydispersity index of the block copolymer for Examples 9 through 12 are given in TABLE 3 below.

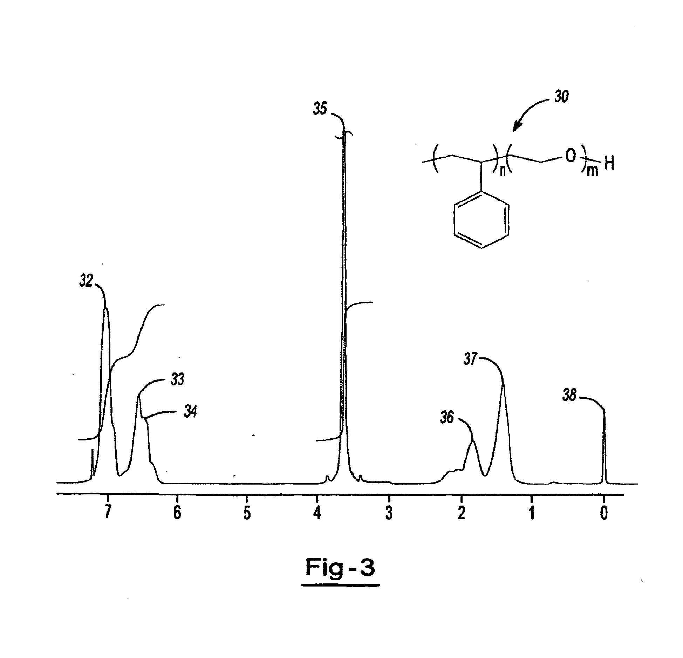

A typical $^1$H NMR spectrum of a PS-PEO block copolymer used for determining the concentration of the ethylene oxide in the block copolymer (and thus the number average molecular weight of the ethylene oxide containing blocks) is shown in FIG. 3. Referring to FIG. 3, the block copolymer may have the repeating units illustrated in a chemical structure 30. By way of example, an expected NMR spectrum may for the block copolymer may have a peaks 32 at about 7.046 ppm, a peak 33 at about 6.577 ppm, a peak 34 at about 6.503 ppm, a peak 35 at about 3.645 ppm, a peak 36 at about 1.850 ppm, a peak 37 at about 1.424 ppm, a peak 38 at about 1.424, or any combination thereof.

| TABLE 3. Polystyrene - Polyethylene Oxide Diblock Copolymers | | | | |
|---|---|---|---|---|
| Example | 9 | 10 | 11 | 12 |
| PS Block - Number Average Molecular Weight (GPC - refractive index detector), Daltons | 21,500 | 63,100 | 20300 | 20,300 |
| PEO Block - Number Average Molecular Weight (from $^1$H NMR), Daltons | 27,100 | 13,200 | 11000 | 41,800 |
| Block Copolymer- Total Number Average Molecular Weight, Daltons | 48,600 | 19,500 | 31300 | 62,100 |
| Block Copolymer - Weight Average Molecular Weight (GPC - light scattering detector), Daltons | 48,100 | 16,400 | 33900 | 63,200 |
| Polydisperisty Index of Block Copolymer (Mw/Mn) | 1.03 | 1.08 (after correcting for unreacted PS block) | 1.04 | 1.03 |

Electrolyte compositions are prepared by mixing the polystyrene-polyethylene oxide diblock copolymer with a lithium salt and a solvent. The block copolymer contains about 70 weight percent polyethylene oxide and about 30 weight percent polystyrene. Lithium triflate is used for the lithium salt. The concentration of the lithium salt is selected such that the ratio of oxygen on the block copolymer to U in the salt is about 12:1. Propylene carbonate is used for the solvent. The concentration of the propylene carbonate varied from 0 percent to about 75 weight percent, based on the total weight of the electrolyte composition.

The conductivity is measured using AC impedance spectroscopy in a Solartron. The shear modulus is measured using dynamic mechanical spectroscopy at a temperature of about 30°C and a shear rate of about 1 rad/sec.

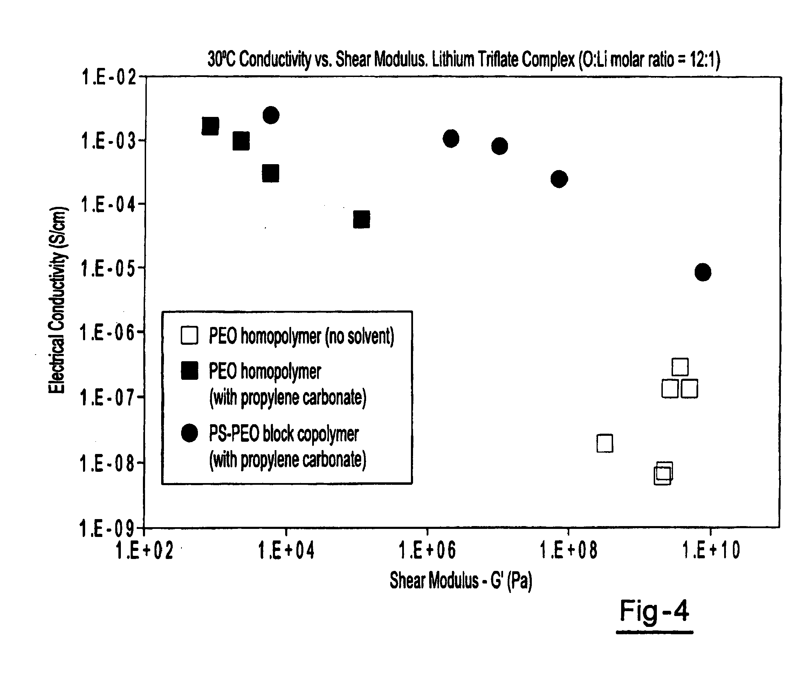

The shear modulus and the conductivity are shown in FIG. 4. Electrolyte compositions which include the polystyrene - polyethylene oxide block copolymer have a high shear modulus, G', measured at 1 rad/sec and about 30 °C and/or high conductivity, $\sigma$, measured at about 30 °C. Some of these electrolytes are characterized by a product of the conductivity G'·$\sigma$ greater than about $10^3$ (S/cm)(dynes/cm$^2$). For example, a sample with 45 weight percent propylene carbonate has a modulus greater than about $10^8$ Pa and a conductivity greater than about $10^{-4}$ S/cm.

**Claims**

1. A polymeric electrolyte composition comprising

   a. a block copolymer which is a solid at room temperature including

   i. at least one first polymer block having an elastic modulus of 0.7 GPa or more, and which is :-
   a semi-crystalline polymer having a final melting temperature of greater than 60 °C, as measured by differential scanning calorimetry at a heating rate of 10 °C/min, or
   a glassy polymer having a glass transition temperature of greater than 60 °C, as measured by dynamic mechanical analysis according to ASTM E1640-99, and
   ii. at least one second polymer block having an elastic modulus of 0.6 GPa or less, including a polyalkoxide, wherein the second polymer block is a polyalkoxide block including one or more alkylene oxides having from 2 to 8 carbon atoms, wherein the concentration of the alkylene oxides having from 2 to 8 carbon atoms is 85 weight percent or more based on the total weight of the polyalkoxide block,; and

   b. a metal salt having a cation that is mobile in the polymeric electrolyte composition and is capable of carrying a charge, wherein the metal salt includes one or more alkali metal salts, one or more alkaline earth metal salts, or a combination thereof; and
   c. a solvent including one or more cyclic carbonates, one or more acyclic carbonates, one or more fluorine containing carbonates, one or more cyclic esters, or any combination thereof, wherein the concentration of the solvent is greater than 25 weight percent based on the total weight of the polymeric electrolyte composition, wherein the solvent increases the mobility of the cations in the conductive phase, wherein the solvent includes an aprotic solvent;

wherein the first polymer block is present at a concentration greater than 35 weight percent based on the total weight of the block copolymer and includes 55 weight percent or more (based on the total weight of the first polymer block) of a

**7.** The composition of any of claims 1 through 6, wherein the solvent includes one or more cyclic carbonates selected from ethylene carbonate, propylene carbonate, and butylene carbonate, and any combination thereof.

**8.** The composition of any of claims 1 through 7, wherein:-
the electrical conductivity, $\sigma$, is 1 x $10^{-5}$ S/cm or more, and the shear modulus, G', is 1 x $10^5$ Pa or more;
the block copolymer has a cross link density of 100 $\mu$mole/g or less; and a vinyl acetate concentration of 5 weight percent or less; and
the solvent has a dielectric constant of at least 15.

**9.** The composition of any of claims 1 through 8, wherein the composition includes an organophosphate having mono-hydroxy-terminated ethylene oxide-based ligands, or analogues containing propylene oxide, a combination of ethylene oxide and propylene oxide, a monoethyl ether, a monobutyl ether, a monopropyl ether, or 3 to 5 alkoxide groups.

**10.** The composition of any of claims 1 through 9, wherein the first polymer block includes a copolymer of ethylene and acrylic acid, and the acrylic acid is present at from 0.5 weight percent to 40 weight percent based on the total weight of the one or more first polymer blocks.

**11.** The composition of any of claims 1 through 10, wherein the first polymer block is a styrene-containing polymer block including 50 weight percent or more styrene based on the total weight of the styrene-containing polymer block.

**12.** The composition of claim 1, wherein the concentration of solvent is less than 60 weight percent based on the total weight of the polymer electrolyte composition.

**13.** A secondary battery comprising a polymeric electrolyte composition of any of claims 1 through 12, wherein the secondary battery is free of a porous separator.

**Patentansprüche**

**1.** Eine polymere Elektrolytzusammensetzung, die Folgendes beinhaltet:

a. ein Blockcopolymer, das bei Raumtemperatur ein Feststoff ist, umfassend

i. mindestens einen ersten Polymerblock, der einen Elastizitätsmodul von 0,7 GPa oder mehr aufweist, und der Folgendes ist:

ein teilkristallines Polymer mit einer Endschmelztemperatur von größer als 60 °C, wie durch Differenzialrasterkalorimetrie bei einer Erwärmungsrate von 10 °C/min gemessen, oder
ein glasartiges Polymer mit einer Glasübergangstemperatur von größer als 60 °C, wie durch dynamisch-mechanische Analyse gemäß ASTM E1640-99 gemessen, und

ii. mindestens einen zweiten Polymerblock mit einem Elastizitätsmodul von 0,6 GPa oder weniger, der ein Polyalkoxid umfasst, wobei der zweite Polymerblock ein Polyalkoxidblock ist, der ein oder mehrere Alkylenoxide mit von 2 bis 8 Kohlenstoffatomen umfasst, wobei die Konzentration der Alkylenoxide mit von 2 bis 8 Kohlenstoffatomen 85 Gewichtsprozent oder mehr, bezogen auf das Gesamtgewicht des Polyalkoxidblocks, beträgt; und

b. ein Metallsalz mit einem Kation, das in der polymeren Elektrolytzusammensetzung beweglich ist und in der Lage ist, eine Ladung zu tragen, wobei das Metallsalz ein oder mehrere Alkalimetallsalze, ein oder mehrere Erdalkalimetallsalze oder eine Kombination davon umfasst; und
c. ein Lösungsmittel, das ein oder mehrere cyclische Carbonate, ein oder mehrere acyclische Carbonate, ein oder mehrere fluorhaltige Carbonate, ein oder mehrere cyclische Ester oder eine beliebige Kombination davon umfasst, wobei die Konzentration des Lösungsmittels größer als 25 Gewichtsprozent, bezogen auf das Gesamtgewicht der polymeren Elektrolytzusammensetzung, ist, wobei das Lösungsmittel die Beweglichkeit der Kationen in der leitenden Phase erhöht, wobei das Lösungsmittel ein aprotisches Lösungsmittel umfasst;

wobei der erste Polymerblock in einer Konzentration von größer als 35 Gewichtsprozent, bezogen auf das Gesamtgewicht des Blockcopolymers, vorhanden ist und zu 55 Gewichtsprozent oder mehr (bezogen auf das Gesamtgewicht des ersten Polymerblocks) ein erstes Monomer umfasst, das Styrol, Methylmethacrylat, Isobutylmethacrylat, 4-Methylpenten-1, Butylenterephthalat, Ethylenterephthalat oder ein α-Olefin ist; wobei die polymere Elektrolytzusammensetzung ein heterogenes Material ist, das eine strukturelle Phase, welche reich an dem ersten Polymerblock ist, und eine leitende Phase, welche reich an dem Polyalkoxidblock und dem Lösungsmittel ist, umfasst; wobei die strukturelle Phase in einer Konzentration von 30 Prozent oder mehr, bezogen auf das Gesamtvolumen der polymeren Elektrolytzusammensetzung, vorhanden ist;

wobei die polymere Elektrolytzusammensetzung einen Schermodul G', wie durch dynamisch-mechanische Analyse gemäß ASTM D5279-08 bei 1 rad/s und 30 °C gemessen, und eine elektrische Leitfähigkeit σ, wie durch Wechselstrom-Impedanzspektroskopie in einem Solartron unter Verwendung einer Wechselstromamplitude von 10 mV bei etwa 30 °C gemessen, aufzeigt, so dass

    i. G'·σ größer als 20 (S/cm)/Pa ist und
    ii. G' von etwa $10^3$ bis $10^9$ Pa beträgt,

wobei die Zusammensetzung als ein polymerer Elektrolyt nützlich ist.

2. Zusammensetzung gemäß Anspruch 1, wobei der erste Polymerblock ein Homopolymer oder ein statistisches Copolymer ist, wobei das erste Monomer des ersten Polymerblocks in einer Konzentration von 95 Gewichtsprozent oder mehr, bezogen auf das Gesamtgewicht des ersten Polymerblocks, vorhanden ist.

3. Zusammensetzung gemäß Anspruch 1, wobei der erste Polymerblock ein Molekulargewicht von 3000 Da oder mehr aufweist.

4. Zusammensetzung gemäß Anspruch 1, wobei der zweite Polymerblock in einer Konzentration von größer als 10 Gewichtsprozent, bezogen auf das Gesamtgewicht des Blockcopolymers, vorhanden ist.

5. Zusammensetzung gemäß einem der Ansprüche 1 bis 4, wobei das Polyalkoxid ein Ethylenoxidhomopolymer ist.

6. Zusammensetzung gemäß einem der Ansprüche 1 bis 4, wobei das Polyalkoxid ein Copolymer von Ethylenoxid und Propylenoxid mit einem Molverhältnis von Ethylenoxid zu Propylenoxid von 1 : 10 bis etwa 10 : 1 ist.

7. Zusammensetzung gemäß einem der Ansprüche 1 bis 6, wobei das Lösungsmittel ein oder mehrere cyclische Carbonate, ausgewählt aus Ethylencarbonat, Propylencarbonat und Butylencarbonat und einer beliebigen Kombination davon, umfasst.

8. Zusammensetzung gemäß einem der Ansprüche 1 bis 7, wobei:

    die elektrische Leitfähigkeit σ 1 x $10^{-5}$ S/cm oder mehr beträgt und der Schermodul G' 1 x $10^5$ Pa oder mehr beträgt;
    das Blockcopolymer eine Quervernetzungsdichte von 100 μMol/g oder weniger und
    eine Vinylacetatkonzentration von 5 Gewichtsprozent oder weniger aufweist; und
    das Lösungsmittel eine Dielektrizitätskonstante von mindestens 15 aufweist.

9. Zusammensetzung gemäß einem der Ansprüche 1 bis 8, wobei die Zusammensetzung ein Organophosphat mit monohydroxyterminierten Liganden auf Basis von Ethylenoxid oder Analoga, die Propylenoxid, eine Kombination von Ethylenoxid und Propylenoxid, einen Monoethylether, einen Monobutylether, einen Monopropylether oder 3 bis 5 Alkoxidgruppen enthalten, umfasst.

10. Zusammensetzung gemäß einem der Ansprüche 1 bis 9, wobei der erste Polymerblock ein Copolymer aus Ethylen und Acrylsäure umfasst und die Acrylsäure in von 0,5 Gewichtsprozent bis 40 Gewichtsprozent, bezogen auf das Gesamtgewicht des einen oder der mehreren ersten Polymerblöcke, vorhanden ist.

11. Zusammensetzung gemäß einem der Ansprüche 1 bis 10, wobei der erste Polymerblock ein styrolhaltiger Polymerblock ist, der 50 Gewichtsprozent oder mehr Styrol, bezogen auf das Gesamtgewicht des styrolhaltigen Polymerblocks, umfasst.

**12.** Zusammensetzung gemäß Anspruch 1, wobei die Konzentration des Lösungsmittels weniger als 60 Gewichtsprozent, bezogen auf das Gesamtgewicht der Polymerelektrolytzusammensetzung, beträgt.

**13.** Eine Sekundärbatterie, die eine polymere Elektrolytzusammensetzung gemäß einem der Ansprüche 1 bis 12 beinhaltet, wobei die Sekundärbatterie frei von einem porösen Separator ist.

**14.** Ein Verfahren zum Herstellen eines Blockcopolymers der polymeren Elektrolytzusammensetzung gemäß einem der Ansprüche 1 bis 12, das die folgenden Schritte beinhaltet:

a) Mischen

i) eines linearen Copolymers, das zu mindestens 3 Gewichtsprozent ein erstes Monomer mit einer Carbonsäuregruppe und zu mindestens 60 Gewichtsprozent ein zweites Monomer, ausgewählt aus Ethylen und Propylen, enthält;
ii) eines Polyalkoxids, das Ethylenoxid, Propylenoxid oder Kombinationen davon enthält und eine funktionelle Gruppe aufweist, die mit der Carbonsäure reagieren kann; und
iii) optional eines oder mehrerer Lösungsmittel; und

b) Reagierenlassen der funktionellen Gruppe des Polyalkoxids mit der Carbonsäuregruppe des linearen Polymers, um ein Blockcopolymer zu bilden, das mindestens einen auf das lineare Copolymer gepfropften Polyalkoxidblock aufweist,

wobei das Blockcopolymer zu mindestens etwa 5 Gewichtsprozent Alkoxidgruppen, bezogen auf das Gesamtgewicht des Blockcopolymers, enthält.

**Revendications**

**1.** Une composition d'électrolyte polymérique comprenant

a. un copolymère à blocs qui est un solide à température ambiante comportant

i. au moins un premier bloc de polymère ayant un module élastique de 0,7 GPa ou plus, et qui est :

un polymère semi-cristallin ayant une température de fusion finale supérieure à 60 °C, telle que mesurée par calorimétrie différentielle à balayage à une vitesse de chauffage de 10 °C/min, ou
un polymère vitreux ayant une température de transition vitreuse supérieure à 60 °C, telle que mesurée par analyse mécanique dynamique selon l'ASTM E1640-99, et

ii. au moins un deuxième bloc de polymère ayant un module élastique de 0,6 GPa ou moins, comportant un polyalcoxyde, où le deuxième bloc de polymère est un bloc de polyalcoxyde comportant un ou plusieurs oxydes d'alkylène ayant de 2 à 8 atomes de carbone, où la concentration des oxydes d'alkylène ayant de 2 à 8 atomes de carbone est de 85 pour cent en poids ou plus rapporté au poids total du bloc de polyalcoxyde ; et

b. un sel de métal ayant un cation qui est mobile dans la composition d'électrolyte polymérique et est capable de porter une charge, où le sel de métal comporte un ou plusieurs sels de métal alcalin, un ou plusieurs sels de métal alcalinoterreux, ou une combinaison de ceux-ci ; et
c. un solvant comportant un ou plusieurs carbonates cycliques, un ou plusieurs carbonates acycliques, un ou plusieurs carbonates contenant du fluor, un ou plusieurs esters cycliques, ou toute combinaison de ceux-ci, où la concentration du solvant est supérieure à 25 pour cent en poids, rapporté au poids total de la composition d'électrolyte polymérique, où le solvant augmente la mobilité des cations dans la phase conductrice, où le solvant comporte un solvant aprotique ;

où le premier bloc de polymère est présent à une concentration supérieure à 35 pour cent en poids rapporté au poids total du copolymère à blocs et comporte 55 pour cent en poids ou plus (rapporté au poids total du premier bloc de polymère) d'un premier monomère qui est le styrène, le méthacrylate de méthyle, le méthacrylate d'isobutyle, le 4-méthyl pentène-1, le téréphtalate de butylène, le téréphtalate d'éthylène, ou une $\alpha$-oléfine ; où la composition d'électrolyte polymérique est un matériau hétérogène comportant une phase structurale qui est riche en ce premier bloc de polymère, et une phase conductrice qui est riche en ce bloc de polyalcoxyde et ce solvant ; où la phase structurale est présente à une concentration de 30 pour cent ou plus rapporté au volume total de la composition d'électrolyte polymérique ;

où la composition d'électrolyte polymérique manifeste un module de cisaillement, G', tel que mesuré par analyse mécanique dynamique selon l'ASTM D5279-08 à 1 rad/sec et 30 °C, et une conductivité électrique, σ, telle que mesurée par spectroscopie d'impédance CA dans un Solartron en utilisant une amplitude de courant alternatif de 10 mV à environ 30 °C, de telle sorte que

i. G'·σ est supérieur à 20 (S/cm)/Pa et
ii. G' va d'environ $10^3$ à $10^9$ Pa

où la composition est utile comme électrolyte polymérique.

2. La composition de la revendication 1, où le premier bloc de polymère est un homopolymère ou un copolymère statistique, dans lequel le premier monomère du premier bloc de polymère est présent à une concentration de 95 pour cent en poids ou plus rapporté au poids total du premier bloc de polymère.

3. La composition de la revendication 1, où le premier bloc de polymère a une masse moléculaire de 3 000 Da ou plus.

4. La composition de la revendication 1, où le deuxième bloc de polymère est présent à une concentration supérieure à 10 pour cent en poids, rapporté au poids total du copolymère à blocs.

5. La composition de n'importe lesquelles des revendications 1 à 4, où le polyalcoxyde est un homopolymère d'oxyde d'éthylène.

6. La composition de n'importe lesquelles des revendications 1 à 4, où le polyalcoxyde est un copolymère d'oxyde d'éthylène et d'oxyde de propylène, ayant un rapport molaire de l'oxyde d'éthylène à l'oxyde de propylène allant de 1/10 à environ 10/1.

7. La composition de n'importe lesquelles des revendications 1 à 6, où le solvant comporte un ou plusieurs carbonates cycliques sélectionnés parmi le carbonate d'éthylène, le carbonate de propylène, et le carbonate de butylène, et toute combinaison de ceux-ci.

8. La composition de n'importe lesquelles des revendications 1 à 7, où :

la conductivité électrique, σ, est de $1 \times 10^{-5}$ S/cm ou plus, et le module de cisaillement, G', est de $1 \times 10^5$ Pa ou plus ;
le copolymère à blocs a une densité de réticulation de 100 μmole/g ou moins ; et une concentration d'acétate de vinyle de 5 pour cent en poids ou moins ; et
le solvant a une constante diélectrique d'au moins 15.

9. La composition de n'importe lesquelles des revendications 1 à 8, où la composition comporte un organophosphate ayant des ligands à base d'oxyde d'éthylène à terminaison mono-hydroxy, ou des analogues contenant de l'oxyde de propylène, une combinaison d'oxyde d'éthylène et d'oxyde de propylène, un éther monoéthylique, un éther monobutylique, un éther monopropylique, ou 3 à 5 groupes alcoxyde.

10. La composition de n'importe lesquelles des revendications 1 à 9, où le premier bloc de polymère comporte un copolymère d'éthylène et d'acide acrylique, et l'acide acrylique est présent à de 0,5 pour cent en poids à 40 pour cent en poids rapporté au poids total de ces un ou plusieurs premiers blocs de polymère.

11. La composition de n'importe lesquelles des revendications 1 à 10, où le premier bloc de polymère est un bloc de polymère contenant du styrène comportant 50 pour cent en poids ou plus de styrène rapporté au poids total du bloc de polymère contenant du styrène.

12. La composition de la revendication 1, où la concentration de solvant est inférieure à 60 pour cent en poids rapporté au poids total de la composition d'électrolyte polymère.

**13.** Une batterie secondaire comprenant une composition d'électrolyte polymérique de n'importe lesquelles des revendications 1 à 12, où la batterie secondaire est exempte d'un séparateur poreux.

**14.** Un procédé pour préparer le copolymère à blocs de la composition d'électrolyte polymérique de n'importe lesquelles des revendications 1 à 12, comprenant les étapes consistant

a) à mélanger

i) un copolymère linéaire contenant au moins 3 pour cent en poids d'un premier monomère ayant un groupe acide carboxylique et au moins 60 pour cent en poids d'un deuxième monomère sélectionné parmi l'éthylène et le propylène ;
ii) un polyalcoxyde contenant de l'oxyde d'éthylène, de l'oxyde de propylène, ou des combinaisons de ceux-ci et ayant un groupe fonctionnel qui est réactif avec l'acide carboxylique ; et
iii) de manière facultative un ou plusieurs solvants ; et

b) à faire réagir le groupe fonctionnel du polyalcoxyde avec le groupe acide carboxylique du polymère linéaire afin de former un copolymère à blocs ayant au moins un bloc de polyalcoxyde greffé sur le copolymère linéaire,

où le copolymère à blocs contient au moins environ 5 pour cent en poids de groupes alcoxyde rapporté au poids total du copolymère à blocs.

**Fig-1**

**Fig-2**

Fig-3

26

30°C Conductivity vs. Shear Modulus. Lithium Triflate Complex (O:Li molar ratio = 12:1)

Legend:
□ PEO homopolymer (no solvent)
■ PEO homopolymer (with propylene carbonate)
● PS-PEO block copolymer (with propylene carbonate)

Y-axis: Electrical Conductivity (S/cm)
X-axis: Shear Modulus - G' (Pa)

<u>Fig-4</u>

EP 2 396 848 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5196484 A
- US 5219681 A
- US 5424150 A

### Non-patent literature cited in the description

- **A HALLDÉN ; B. WESSLÉN.** Preparation and Characterization of Poly(ethylene-graft-ethylene oxide. *Journal of Applied Polymer Science,* 1996, vol. 60, 2495-2501
- **P. JANNASCH ; B. WESSLÉN.** *J. Polymer Science,* 1993, vol. 46, 1519-1529
- **Z. SONG ; W. BAKER.** Chemical Reactions and Reactivity of Primary, Secondary, and Tertiary Diamines with Acid Functionalized Polymers. *J. Polymer Science,* 1992, vol. 30, 1589-1600
- **R.W. WARFIELD ; F. R. BAMET.** Elastic constants of Bulk Polymers. *Naval Ordnance Laboratories,* 12 April 1972, vol. 71-226, 2
- Polymer Science. Hemisphere Publishing Co, 1982, 54
- **B. WUNDERLICH.** Macromolecular Physics. Academic Press, 1980, vol. 3, 48
- Handbook of Batteries. McGraw-Hill, 2001, 2.26-2.29